# EUROPÄISCHE PATENTSCHRIFT

(11) **EP 3 671 159 B1**
(45) Veröffentlichungstag und Bekanntmachung des Hinweises auf die Patenterteilung: **21.12.2022**
(21) Anmeldenummer: 18215757.8
(22) Anmeldetag: 21.12.2018
(51) Int. Cl.: G01L 9/00, B32B 18/00, B33Y 10/00

(54) **KÖRPER HERGESTELLT DURCH ADDITIVES HERSTELLUNGSVERFAHREN UND VERFAHREN ZUR HERSTELLUNG DES KÖRPERS**
BODY FORMED BY AN ADDITIVE MANUFACTURING METHOD AND METHOD FOR MANUFACTURING THE SAME
CORPS RÉALISÉ PAR UN PROCÉDÉ DE FABRICATION ADDITIF AINSI QUE PROCÉDÉ DE FABRICATION DUDIT CORPS

(43) Veröffentlichungstag der Anmeldung: 24.06.2020
(73) Patentinhaber: Exentis Knowledge GmbH, 5608 Stetten AG (CH)
(72) Erfinder: Vasic, Srdan, CH - 8810 Horgen (CH); Schmitt, Rafael, CH - 8051 Zürich (CH)
(74) Vertreter: Wenzel Nemetzade Warthmüller Patentanwälte Part mbB

(56) Entgegenhaltungen:
- WO-A1-2017/021291
- DE-U1- 29 619 276
- US-A1- 2016 103 031
- L-M FALLER ET AL: "Rapid prototyping of force/pressure sensors using 3D- and inkjet-printing", JOURNAL OF MICROMECHANICS & MICROENGINEERING, INSTITUTE OF PHYSICS PUBLISHING, BRISTOL, GB, Bd. 28, Nr. 10, 3. Juli 2018 (2018-07-03), Seite 104002, XP020330825, ISSN: 0960-1317, DOI: 10.1088/1361-6439/AAADF4 [gefunden am 2018-07-03]

## Beschreibung

Die vorliegende Erfindung betrifft einen Formkörper, insbesondere für einen Drucksensor, einen Drucksensor mit einem solchen Formkörper sowie ein Verfahren zur Herstellung eines Formkörpers.

Für die Druckmessung gasförmiger oder flüssiger Medien können sogenannte keramische oder metallische Drucksensoren eingesetzt werden. Keramische Drucksensoren mit einem eine Membran aufweisenden keramischen Sensorkörper bieten sich insbesondere zur Druckmessung aggressiver Medien an.

Die Herstellung keramischer Drucksensoren ist jedoch mit einem verhältnismäßig hohen Aufwand verbunden. So erfordern mittels Pressverfahren hergestellte keramische Sensorkörper regelmäßig aufwendige Nachbearbeitungsschritte. Denn durch die eingesetzten Pressenverfahren können nur verhältnismäßig dicke und ungleichmäßige Schichten erzeugt werden können. Die jeweilige Membran des Sensorkörpers ist also im Anschluss an das Pressen, beispielsweise mittels Schleifen oder Läppen, mechanisch nachzubearbeiten, um einerseits eine ausreichend geringe Membrandicke zu erzeugen und andererseits die erforderliche Genauigkeit der Membran sicherzustellen. Schließlich ergeben sich durch die Herstellung im Wege des Pressverfahrens Restriktionen hinsichtlich der geometrischen Formen sowie Abmessungen keramischer Drucksensoren.

Vor dem oben dargelegten Hintergrund bestand die Aufgabe der vorliegenden Erfindung darin, einen Formkörper, insbesondere für einen Drucksensor, anzugeben, der mit verringertem Aufwand beziehungsweise erhöhter Flexibilität hergestellt werden kann. Ebenso bestand die Aufgabe darin, ein Verfahren zur Herstellung eines Formkörpers anzugeben. Im Stand der Technik sind auch keramische Drucksensoren bekannt, deren Sensorkörper mittels 3D-Druckverfahren hergestellt werden (siehe L-M Faller et al: "Rapid prototyping of force/pressure sensors using 3D- and inkjet-printing",Journal of Micromechanics & Microsensing, 2018, US 2016/103031 A1 und WO 2017/021291 A1).

Die vorliegende Erfindung betrifft einen Formkörper gemäß Anspruch 1. Weiterhin betrifft die vorliegende Erfindung ein Verfahren zur Herstellung eines Formkörpers gemäß Anspruch 14.

Durch Erzeugung der Membran aus einer Mehrzahl von Schichten verhältnismäßig geringer Dicke kann eine Membrangesamtdicke mit relativ hoher Genauigkeit erzielt werden. Demgegenüber kann durch Erzeugung des Tragabschnitts aus einer Mehrzahl von Schichten verhältnismäßig großer Dicke eine zügige Fertigung ermöglicht werden. Durch verhältnismäßig dick bemessene Schichten kann in nur wenigen Prozessschritten die jeweils gewünschte Gesamthöhe des Tragabschnitts erreicht werden. Die Fertigungseffizienz kann auf diese Weise verbessert werden.

Vorteilhafte Ausgestaltungen sind Gegenstand der abhängigen Ansprüche und werden nachfolgend im Einzelnen erörtert.

Ein erfindungsgemäßer Formkörper ist insbesondere für einen Drucksensor geeignet. Ein solcher Drucksensor mit einem erfindungsgemäßen Formkörper kann insbesondere für die Druckmessung von Fluiden eingesetzt werden. Bei einem erfindungsgemäßen Formkörper kann es sich folglich um einen Sensorkörper handeln, insbesondere um einen Sensorkörper für einen Drucksensor.

Ein erfindungsgemäßer Formkörper weist eine Membran und einen die Membran tragenden Tragabschnitt auf, wobei die Membran zumindest abschnittsweise aus einen keramischen Werkstoff mittels additiver Fertigung, insbesondere 3D-Siebdruck, erzeugt ist. Die Membran weist in erfindungsgemäßer Weise zumindest abschnittsweise eine Dicke von weniger als 0,5 mm auf.

Durch den Einsatz additiver Fertigung, insbesondere des 3D-Siebdrucks, wird die Erzeugung der Membran in der jeweils gewünschten Dicke, insbesondere in einer Dicke von weniger als 0,5 mm, auf besonders vorteilhafte Weise mit nur geringem Aufwand ermöglicht. Etwaige Nachbearbeitungsschritte für das Erreichen der jeweils gewünschten Membrandicke beziehungsweise der Gleichmäßigkeit und/oder Genauigkeit der Membrandicke können auf ein geringes Maß reduziert oder auch vollständig vermieden werden. Der Fertigungsaufwand kann somit insgesamt verringert werden. Gleichzeitig können durch den Einsatz additiver Fertigung, insbesondere des 3-D Siebdrucks, Einbußen in der Bauteilqualität oder der Fertigungsgenauigkeit vermieden oder in vernachlässigbarem Umfang gehalten werden.

Als Membran kann vorliegend ein Materialabschnitt verstanden werden, der im Betrieb, insbesondere im Messbetrieb, eine Nachgiebigkeit aufweist, insbesondere eine im Betrieb messbare Flexibilität gewährleistet. Es kommt dabei auf das Verformungsverhalten der Membran insgesamt an. Dabei ist es möglich, dass einzelne Abschnitte der Membran selbst eine geringere Verformbarkeit als andere Abschnitte aufweisen. Ebenso ist es möglich, dass einzelne Abschnitte der Membran vollständig versteift sind. Eine Membran kann im Sinne der vorliegenden Erfindung nach außen hin durch formsteife Strukturen oder Materialabschnitte begrenzt sein, insbesondere durch den die Membran tragenden Tragabschnitt. Die Begrenzung einer Membran nach außen kann dementsprechend definiert sein durch Strukturen oder Materialabschnitte, die im Betrieb, insbesondere im Messbetrieb, kein ausreichendes oder geeignet messbares Nachgiebigkeitsverhalten aufweisen. Der die Membran tragende Tragabschnitt kann demnach ausreichend steif ausgebildet sein.

Gemäß einer bevorzugten Ausführungsform der vorliegenden Erfindung weist die Membran zumindest abschnittsweise eine Dicke von weniger als 0,4 mm, bevorzugt von weniger als 0,35 mm, bevorzugt von weniger als 0,3 mm, weiter bevorzugt von weniger als 0,25 mm, noch weiter bevorzugt von weniger als 0,225 mm, insbesondere von weniger als 0,2 mm auf. Durch eine derartige Bemessung der Membrandicke kann im Einsatz eines jeweiligen Drucksensors eine besonders hohe Messgenauigkeit beziehungsweise Messsensibilität erreicht werden.

In weiter vorteilhafter Weise kann die Membran zumindest abschnittsweise eine Dicke von mehr als 0,1 mm, bevorzugt von mehr als 0,15 mm, weiter bevorzugt von mehr als 0,175 mm oder mehr als 0,2 mm aufweisen. Durch eine solche Mindestdicke kann eine ausreichende Stabilität und/oder Gasdichtigkeit der Membran sichergestellt und somit ein verhältnismäßig hohes Maß an Betriebssicherheit gewährleistet werden.

In bevorzugter Weise kann neben der Membran auch der die Membran tragende Tragabschnitt zumindest abschnittsweise aus einem keramischen Werkstoff bestehen. Insbesondere kann auch der die Membran tragende Tragabschnitt mittels additiver Fertigung, bevorzugt mittels 3D-Siebdruck, erzeugt sein. Der Fertigungsaufwand kann auf diese Weise weiter verringert und die Medienbeständigkeit des so erzeugten Formkörpers verbessert werden.

In weiter bevorzugter Weise können die Membran und/oder der Tragabschnitt jeweils vollständig aus einem keramischen Werkstoff erzeugt sein. Die Medienbeständigkeit kann hierdurch weiter verbessert werden.

Die Membran und/oder der die Membran tragende Tragabschnitt können in vorteilhafter Weise aus Aluminiumoxid erzeugt sein beziehungsweise Aluminiumoxid enthalten. Dabei kann die Membran und/der der Tragabschnitt zumindest abschnittsweise aus Aluminiumoxid oder einer Aluminiumoxid enthaltenden Werkstoffzusammensetzung erzeugt sein. Ebenso kann die Membran und/oder der Tragabschnitt vollständig aus Aluminiumoxid oder einer Aluminiumoxid enthaltenden Werkstoffzusammensetzung erzeugt sein. Aluminiumoxid ist besonders geeignet für den Einsatz in aggressiven Medien und gewährleistet somit ein besonders hohes Maß an Widerstandsfähigkeit im Betrieb.

Wie voranstehend erwähnt kann es sich bei dem keramischen Werkstoff für die Membran und/oder den Tragabschnitt um Aluminiumoxid oder um eine Aluminiumoxid enthaltende Werkstoffzusammensetzung handeln. Es können jedoch auch andere keramische Werkstoffe für die Herstellung der Membran und/oder des Tragabschnitts eingesetzt werden.

Gemäß einer vorteilhaften Ausführungsform können die Membran und der Tragabschnitt aus einem identischen Werkstoff beziehungsweise aus Werkstoffen mit identischer Zusammensetzung gefertigt sein, wodurch eine besonders effiziente Fertigung ermöglicht wird.

Ebenso ist es möglich, dass sich die Werkstoffe und/oder Werkstoffzusammensetzungen der Membran und des Tragabschnitt voneinander unterscheiden, zumindest abschnittsweise unterschiedlich sind. Es besteht in bevorzugter Weise die Möglichkeit, dass die Werkstoffe der Membran und des Tragabschnitt einen identischen Grundstoff und/oder andere Hilfsstoffe aufweisen. Die jeweils gewünschten Betriebseigenschaften der Membran und des Tragabschnitts können somit in vorteilhafter Weise beeinflusst werden.

Es besteht weiterhin die Möglichkeit, dass die Membran vollständig aus einem einzigen Werkstoff beziehungsweise einer einzigen Werkstoffkomposition besteht und der Tragabschnitt aus einer Mehrzahl unterschiedlicher Werkstoffe beziehungsweise Werkstoffkompositionen erzeugt ist. Insbesondere kann der Tragabschnitt in einem in Umfangsrichtung an die Membran angrenzenden Bereich aus einem Werkstoff erzeugt sein, der mit dem Werkstoff der Membran identisch ist. Die weiteren Schichten des Tragabschnitts, welche auf den die Membran in Umfangsrichtung umgebenden Bereich aufgetragen sind, können aus einem anderen Werkstoff beziehungsweise aus einer Werkstoffkomposition bestehen. Die Fertigungsflexibilität kann auf diese Weise weiter verbessert und die Betriebseigenschaften des Formkörpers besonders flexibel für den jeweiligen Anwendungsfall abgestimmt werden.

In weiter bevorzugter Weise können die Membran und der Tragabschnitt einstückig erzeugt sein und/oder einen monolithischen Körper bilden. Eine nachträgliche Verbindung der Membran mit dem Tragabschnitt kann auf diese Weise vermieden werden. Ein etwaiger Übergang zwischen der Membran und dem Tragabschnitt kann somit unanfällig für Beschädigungen sein.

Es kann weiterhin von Vorteil sein, wenn die Membran und/oder der Tragabschnitt vollständig mittels 3D-Siebdruck erzeugt sind. Insbesondere kann mittels 3D-Siebdruck die Membran und im selben Vorgang auch der Tragabschnitt erzeugt werden, wodurch sich eine insgesamt effiziente Fertigung realisieren lässt. Es ist ferner möglich, dass nur ein Teil der Membran und/oder des Tragabschnitts durch 3D-Siebdruck erzeugt ist. Es können also zunächst Materialabschnitte durch andere Verfahren erzeugt und im Wege des 3D-Siebdruckverfahrens mit weiteren Materialschichten ergänzt werden, um die jeweils gewünschte Endform der Membran beziehungsweise des Tragabschnitts zu erhalten. Die Fertigungsflexibilität kann auf diese Weise weiter verbessert werden.

Gemäß einer weiteren Ausführungsform der vorliegenden Erfindung kann die Membran frei von mechanischen Nachbearbeitungen, insbesondere frei von spanenden Nachbearbeitungen, erzeugt sein. Unter mechanischen Nachbearbeitungen soll hier verstanden werden, dass bereits bestehende Konturen oder Oberflächen einem mechanischen Bearbeitungsprozess zur Veränderung der Geometrie oder Oberflächengenauigkeit unterzogen werden. Die für die 3D-Siebdrucktechnologie typischerweise zum Einsatz kommenden Trocknungs- und Sinterprozesse werden hier nicht als mechanische Nachbearbeitung verstanden.

Durch Vermeidung von mechanischen Nachbearbeitungen kann der Herstellungsaufwand in besonders vorteilhafter Weise verringert werden. Ebenso ist es möglich, mechanische Nachbearbeitungen vor einem etwaigen Sinterprozess, insbesondere nach einem Trocknungsprozess, vorzunehmen. Mit anderem Worten wird hierbei der noch nicht gesinterte Grünling einer mechanischen Nachbearbeitung unterzogen, was mit einem verhältnismäßig geringen Aufwand zu bewerkstelligen ist.

In vorteilhafterweise kann die Membran ausschließlich mittels 3D-Siebdruck erzeugt sein. Es könnte also eine Membran durch 3D-Siebdruck, insbesondere durch Erzeugen mehrerer Schichten im 3D-Siebdruckverfahren, erzeugt werden und bereits nach Abschluss der 3D-Siebdruckschritte die endgültige Membran erhalten werden. Dabei kann die Erzeugung mittels 3D-Siebdruck in vorteilhafter Weise so vorgenommen werden, dass mechanische Nachbearbeitungen, insbesondere spanende Nachbearbeitungen, vermieden werden können. Ebenso kann auch der Tragabschnitt ausschließlich mittels 3D-Siebdruck erzeugt sein.

In besonders bevorzugter Weise ist die Membran aus einer Anzahl von mindestens drei Schichten und/oder von höchstens fünfzehn Schichten erzeugt. Ebenso kann die Membran aus einer Anzahl mehr als vier und weniger als zwölf Schichten erzeugt sein. Insbesondere kann die Membran aus einer Anzahl von fünf bis fünfzehn Schichten beziehungsweise zehn bis fünfzehn oder drei bis zwölf, drei bis zehn oder fünf bis zehn oder sechs bis acht Schichten erzeugt sein.

Es kann weiter von Vorteil sein, wenn der Tragabschnitt in einem in Umfangsrichtung an die Membran angrenzenden Bereich Schichtdicken aufweist, die den Schichtdicken der Membran entsprechen. Ebenso kann der Tragabschnitt in einem in Umfangsrichtung an die Membran angrenzenden Bereich aus Schichten erzeugt sein, die unterbrechungsfrei in Schichten der Membran übergehen. Es besteht demnach die Möglichkeit, dass die Membran sowie die in Umfangsrichtung an die Membran angrenzenden Bereiche des Tragabschnitts jeweils aus durchgehend gedruckten Schichten erzeugt sind. Das Drucken derartig durchgehender Schichten lässt sich im Wege des 3D-Siebdrucks mit nur geringem Aufwand bewerkstelligen.

Der Tragabschnitt kann insgesamt aus Schichten unterschiedlicher Dicke erzeugt sein. Insbesondere können die gedruckten Schichten, welche durchgehend mit den Schichten der Membran im Wege des 3D-Siebdrucks erzeugt sind, von nachträglich aufgedruckten Schichten zur Erzielung der jeweils gewünschten Gesamthöhe des Tragabschnitts in Bezug auf ihre Dicke unterschiedlich ausgebildet sein. Weiter bevorzugt ist die Membran fluiddicht, insbesondere gasdicht und/oder flüssigkeitsdicht, ausgebildet. Es ist insbesondere möglich, dass die Dicke und/oder der Werkstoff der Membran und/oder die Anzahl und/oder die Dicke der Schichten der Membran zur Erzielung fluiddichter, insbesondere gasdichter und/oder flüssigkeitsdichter, Eigenschaften gewählt ist. Das Hindurchtreten von gasförmigen beziehungsweise flüssigen Medien durch die Membran des Formkörpers kann auf diese Weise zuverlässig vermieden und damit ein hohes Maß an Betriebssicherheit gewährleistet werden.

Gemäß einer weiter bevorzugten Ausgestaltung kann die Membran zumindest abschnittsweise eine gerundete, insbesondere kreisrunde, Außenumfangsform aufweisen. Bei einer derartigen Ausgestaltung der Membran kann der Tragabschnitt eine gerundete beziehungsweise kreisrunde Innenumfangsform aufweisen. Beispielsweise kann der Tragabschnitt im Wesentlichen ringförmig ausgebildet sein und an seiner kreisrunden Innenumfangsform an die Membran angrenzen beziehungsweise in die Membran übergehen. Eine derartige Ausgestaltung der Membran beziehungsweise des Tragabschnitts gewährleistet eine gleichmäßige Materialbeanspruchung im Übergangsbereich zwischen Membran und Tragabschnitt, wodurch insbesondere Belastungsspitzen vermieden werden können.

Ebenso ist es möglich, dass die Membran eine Außenumfangsform mit wenigstens einer Ecke aufweist, insbesondere mit einer Vielzahl von Ecken. In bevorzugter Weise kann die Membran eine viereckige beziehungsweise rechteckige, insbesondere quadratische, Außenumfangsform aufweisen. Ebenso kann die Membran eine dreieckige, fünfeckige oder sechseckige Außenumfangsform aufweisen.

Membranformen mit einem eckigen Außenumfang können im Betrieb eine verbesserte Druckmessung von Fluiden ermöglichen. Insbesondere kann die Verformung von Rechtecken bei der Druckmessung von Fluiden von Vorteil sein beziehungsweise eine erhöhte Messgenauigkeit ermöglichen.

In weiter bevorzugter Weise ist zumindest eine Ecke an dem Außenumfang der Membran frei von Krümmungsradien oder weist einen Krümmungsradius von weniger als 0,1 mm, insbesondere von weniger als 0,05 mm, weniger als 0,025 mm oder weniger als 0,02 mm auf. Ebenso kann eine Ecke einen maximalen Krümmungsradius von 0,25 mm oder von weniger als 0,5 mm aufweisen.

In weiter bevorzugter Weise weist der Tragabschnitt eine Innenumfangsform auf, die mit der Außenumfangsform der Membran korrespondiert. So kann bei einer kreisrunden Membran die Innenumfangsform des Tragabschnitts ebenfalls kreisrund ausgebildet sein und somit eine gleichmäßige Krafteinleitung von der Membran in den Tragabschnitt gewährleistet werden, wie voranstehend erwähnt. Demgegenüber kann bei einer rechteckigen, insbesondere quadratischen, Außenumfangform der Membran die Innenumfangsform des Tragabschnitts rechteckig beziehungsweise quadratisch ausgebildet sein.

Es kann weiter von Vorteil sein, wenn der Tragabschnitt, insbesondere ein Querschnitt des Tragabschnitts, zumindest abschnittsweise eine gerundete, insbesondere kreisrunde und/oder zylindrische, Außenumfangsform aufweist. Ebenso ist es möglich, dass der Tragabschnitt, insbesondere ein Querschnitt des Tragabschnitts, eine Außenumfangsform mit wenigstens einer Ecke aufweist.

Der Tragabschnitt verläuft in vorteilhafter Weise rings um die Membran herum, insbesondere vollständig um die Membran. Der Tragabschnitt kann die Membran vollständig und/oder unterbrechungsfrei einfassen und/oder abstützen. Der Tragabschnitt kann ringförmig ausgebildet sein.

Gemäß einer weiteren Ausführungsform kann die Außenumfangsform des Tragabschnitts mit der Innenumfangsform des Tragabschnitts korrespondieren, so dass sich im Wesentlichen konstante Wandstärken des Tragabschnitts in Umfangsrichtung um die Membran herum ergeben. Ebenso ist es möglich, dass sich die Außenumfangsform des Tragabschnitts von der Innenumfangsform des Tragabschnitts unterscheidet. Beispielsweise kann die Innenumfangsform des Tragabschnitts im Querschnitt quadratisch und die Außenumfangsform im Querschnitt rund sein, was beispielsweise im Hinblick auf Bauraumbegrenzungen von Vorteil sein kann. Die Form des Innenumfangs kann somit unabhängig von der Form des Außenumfangs gewählt werden, wodurch ein höheres Maß an Gestaltungsflexibilität erreicht wird.

Schließlich kann der Tragabschnitt entlang einer Längserstreckung Abschnitte mit unterschiedlichen Innenumfangsformen aufweisen.

Der Tragabschnitt kann also in vorteilhafter Weise entlang einer Längserstreckung Abschnitte mit unterschiedlichen Innenumfangsformen und/oder Innenumfangsabmessungen aufweisen. Dabei kann durch einen ersten Abschnitt des Tragabschnitts der Außenumfang der Membran abgebildet sein. Ein zweiter Abschnitt mit gegenüber dem ersten Abschnitt abweichender und in Längserstreckung konstanter Innenumfangsform und/oder -abmessung kann vorzugsweise wenigstens 25% der Längserstreckung des Tragabschnitts bilden.

Unter Längserstreckung soll hier eine Höhenrichtung des Formkörpers verstanden werden. Die Längserstreckung beziehungsweise Höhenrichtung des Formkörpers kann quer zur Erstreckung der Membran verlaufen.

In vorteilhafter Weise kann demnach in Höhenrichtung beziehungsweise Längserstreckung des Formkörpers eine Verlaufsänderung am Innenumfang des Tragabschnitts ausgebildet sein. Ein erster Abschnitt kann dabei den Außenumfang der Membran abbilden und/oder diese zumindest abschnittsweise umgeben. Dabei kann der erste Abschnitt in Längserstreckung oder Höhenrichtung auch über die Membran überstehen. Anschließend oder beabstandet von diesem ersten Abschnitt kann ein zweiter Abschnitt mit einer gegenüber dem ersten Abschnitt abweichender und in Längserstreckung konstanter Innenumfangsform und/oder - abmessung vorgesehen sein. Dieser zweite Abschnitt kann mindestens 25% der Längserstreckung des Tragabschnitts bilden, also verhältnismäßig hoch aufbauen.

Durch unterschiedliche Innenumfangsformen und/oder Innenumfangsabmessungen des Tragabschnitts beziehungsweise durch eine Verlaufsänderung am Innenumfang des Tragabschnitts kann die Funktionalität des Formkörpers besonders vorteilhaft an die jeweiligen Einsatzbedingungen angepasst werden. Beispielsweise kann ein die Membran umgebender Abschnitt des Tragabschnitts die Außengeometrie der Membran definieren oder diese abbilden. Ein weiterer Abschnitt des Tragabschnitts kann im Hinblick auf eine schnelle Fertigung ausgelegt sein, insbesondere aufgrund einer Mindesterstreckung von 25 % entlang einer Höhenrichtung des Tragabschnitts. Die Fertigungsflexibilität wird auf diese Weise verbessert.

Beispielsweise kann der Innenumfang durch einen eckigen Abschnitt sowie einen daran anschließenden runden Abschnitt gebildet sein. Dabei kann der eckige Abschnitt insbesondere an die Membran des Formkörpers angrenzen.

Mögliche Aufnahmen für Dichtelemente sollen vorliegend nicht als Variation der Innenumfangsform und/oder -abmessung angesehen werden, da diese sich nur über eine geringe Höhe des Tragabschnitts erstrecken. Insbesondere bildet ein Abschnitt, welcher eine Dichtungsaufnahme definiert, weniger als 25 % der Längserstreckung des Tragabschnitts.

Gemäß einer bevorzugten Ausführungsform kann der zweite Abschnitt des Tragabschnitts mindestens 30%, bevorzugt 35%, weiter bevorzugt 40%, weiter bevorzugt 45%, weiter bevorzugt 50%, noch weiter bevorzugt 55%, noch weiter bevorzugt 60%, der Längserstreckung des Tragabschnitts bilden. Die Fertigungseffizienz lässt sich auf diese Weise verbessern.

Gemäß einer besonders bevorzugten Ausgestaltung kann der größtmögliche Abstand zweier auf dem Außenumfang der Membran liegender Punkte weniger als 20 mm, bevorzugt weniger als 18 mm, bevorzugt weniger als 16 mm, insbesondere etwa 15 mm, betragen. Ebenso kann ein entsprechender Abstand geringer sein als 15 mm, beispielsweise geringer als 10 mm, bevorzugt geringer als 8 mm, bevorzugt geringer als 6 mm, bevorzugt geringer als 5 mm, bevorzugt geringer als 4,5 mm oder geringer als 4 mm.

Ferner ist es möglich, dass der größtmögliche Abstand zweier auf dem Außenumfang der Membran liegender Punkte größer ist als 2 mm, bevorzugt größer als 3 mm, weiter bevorzugt größer als 4 mm, noch weiter bevorzugt größer als 5 mm oder größer 8 mm oder größer als 10 mm.

Durch derartige Membranabmessungen kann einerseits eine verhältnismäßig kleine Bauform sichergestellt werden. Gleichzeitig lassen sich Membrane mit derartigen Abmessungen reproduzierbar in hoher Güte herstellen.

Bei dem größtmöglichen Abstand zweier auf dem Außenumfang der Membran liegender Punkte kann es sich insbesondere um einen Durchmesser oder um eine Diagonale der Membran handeln, insbesondere um einen Durchmesser oder um eine Diagonale der Membran in Draufsicht auf die Membran. Der größtmögliche Abstand zweier auf dem Außenumfang der Membran liegender Punkte betrifft insbesondere Punkte, die auf einer Ebene der Membran liegen, insbesondere eine auf einer oder parallel zu einer Membranoberfläche verlaufenden Ebene.

Gemäß einer weiteren vorteilhaften Ausgestaltung kann in einem Querschnitt des Tragabschnitts der größtmögliche Abstand zweier auf dem Außenumfang des Tragabschnitts liegender Punkte kleiner als 25 mm, bevorzugt kleiner als 22 mm, bevorzugt kleiner als 20 mm, weiter bevorzugt kleiner als 15 mm, weiter bevorzugt kleiner als 12 mm, weiter bevorzugt kleiner als 10 mm, noch weiter bevorzugt kleiner als 9,5 mm, noch weiter bevorzugt etwa 9 mm oder geringer als 9 mm sein.

Ferner kann in vorteilhafter Weise in einem Querschnitt des Tragabschnitts der größtmögliche Abstand zweier auf dem Außenumfang des Tragabschnitts liegender Punkte größer sein als 5 mm, bevorzugt größer als 7 mm, bevorzugt größer als 8 mm oder größer als 10 mm sein.

Ein derart bemessener Tragabschnitt kann einerseits eine ausreichende Stabilität gewährleisten und gleichzeitig eine kompakte Baugröße sicherstellen. Bei dem größtmöglichen Abstand zweier auf dem Außenumfang des Tragabschnitts liegender Punkte kann es sich um einen Durchmesser oder um eine Diagonale handeln. Der größtmögliche Abstand zweier auf dem Außenumfang des Tragabschnitts liegender Punkte betrifft insbesondere Punkte, die auf einer Ebene des Tragabschnitts liegen, insbesondere eine auf einer orthogonal zur Längserstreckung des Tragabschnitts verlaufende Ebene. Eine solche Ebene kann zudem auf und/oder parallel zu einer Membranoberfläche verlaufen.

Gemäß einer weiter bevorzugten Ausgestaltung kann die Membran eine Höhen- und/oder Dickenstrukturierung aufweisen. Hierunter können Variationen der Dicke beziehungsweise der Erstreckung der Membran in Höhenrichtung des Formkörpers verstanden werden. Die Membran kann demgemäß Abschnitte mit unterschiedlichen Dicken beziehungsweise mit unterschiedlichen Stärken und/oder Erstreckungen in Höhenrichtung des Formkörpers aufweisen. Das Verformungsverhalten der Membran kann hierdurch in geeigneter Weise beeinflusst werden.

Gemäß einer weiter bevorzugten Ausgestaltung kann eine Mehrzahl von Membranen vorgesehen sein. Dabei können die Membrane insbesondere voneinander getrennt und/oder beabstandet ausgebildet sein. Die unterschiedlichen Membrane können durch einen Materialabschnitt des Tragabschnitts voneinander getrennt sein. Die unterschiedlichen Membrane können entlang einer gemeinsamen Ebene verlaufen und/oder quer zur Höhenrichtung des Formkörpers voneinander beabstandet sein. Die Membrane können im Betrieb für unterschiedliche Messzwecke verwendet werden, insbesondere für unterschiedliche Messbereiche.

In weiter bevorzugter Weise kann die Membran und/oder der Tragabschnitt mit zumindest einer Leiterbahn bedruckt sein. An der Membran und/oder an dem Tragabschnitt kann eine mittels 3D-Siebdruck erzeugte Leiterbahn angeordnet sein. Der Fertigungsaufwand lässt sich hierdurch weiter reduzieren, da im 3D-Siebdruck nicht nur die Membran beziehungsweise der Tragabschnitt erzeugt wird sondern auch eine jeweils für den Sensorbetrieb erforderliche Leiterbahn.

Die vorliegende Erfindung betrifft schließlich auch einen Drucksensor, insbesondere zur Druckmessung von Fluiden, mit einem Formkörper, der eine Membran und einen die Membran tragenden Tragabschnitt aufweist, wobei die Membran und der Tragabschnitt zumindest abschnittsweise aus einem keramischen Werkstoff mittels additiver Fertigung, insbesondere mittels 3D-Siebdruck, erzeugt sind.

Die in Bezug auf den Formkörper voranstehend beschriebenen Einzelheiten gelten gleichermaßen auch für das erfindungsgemäße Verfahren, für die voranstehend beschriebenen Drucksensoren und auch für Formkörper und/oder Sensorkörper gemäß der ebenfalls voranstehend erwähnten weiteren unabhängigen Aspekte der vorliegenden Erfindung.

Nachfolgend wird die Erfindung beispielhaft anhand vorteilhafter Ausführungsformen unter Bezugnahme auf die beigefügten Figuren beschrieben. Es zeigen jeweils schematisch:
- Fig. 1: eine perspektivische Darstellung eines erfindungsgemäßen Formkörpers von einer Oberseite,
- Fig. 2: eine perspektivische Darstellung eines erfindungsgemäßen Formkörpers von einer Unterseite,
- Fig. 3: eine Unteransicht eines Formkörpers gemäß Fig. 1 und 2,
- Fig. 4: eine Draufsicht auf einen Formkörper gemäß Fig. 1 bis 3,
- Fig. 5: eine Längsschnittdarstellung eines Formkörpers gemäß Fig. 1 bis 4,
- Fig. 6: eine Detailansicht A der Fig. 5,
- Fig. 7: eine perspektivische Darstellung eines erfindungsgemäßen Formkörpers von einer Unterseite gemäß einer weiteren Ausführungsform,
- Fig. 8: eine Unteransicht eines Formkörpers gemäß Fig. 7,
- Fig. 9: eine perspektivische Darstellung eines erfindungsgemäßen Formkörpers von einer Unterseite gemäß einer noch weiteren Ausführungsform,
- Fig. 10: eine Unteransicht eines Formkörpers gemäß Fig. 9,
- Fig. 11: eine perspektivische Darstellung eines erfindungsgemäßen Formkörpers von einer Unterseite gemäß einer noch weiteren Ausführungsform,
- Fig. 12: eine Unteransicht eines Formkörpers gemäß Fig. 11,
- Fig. 13: eine Längsschnittdarstellung eines Formkörpers gemäß Fig. 11 und 12,
- Fig. 14: eine perspektivische Darstellung eines erfindungsgemäßen Formkörpers von einer Unterseite gemäß einer noch weiteren Ausführungsform,
- Fig. 15: eine Unteransicht eines Formkörpers gemäß Fig. 14,
- Fig. 16: eine Längsschnittdarstellung eines Formkörpers gemäß Fig. 14 und 15,
- Fig. 17: eine perspektivische Darstellung eines erfindungsgemäßen Formkörpers von einer Unterseite gemäß einer noch weiteren Ausführungsform,
- Fig. 18: eine Unteransicht eines Formkörpers gemäß Fig. 17,
- Fig. 19: eine Längsschnittdarstellung eines Formkörpers gemäß Fig. 17 und 18,
- Fig. 20: eine perspektivische Darstellung eines erfindungsgemäßen Formkörpers von einer Unterseite gemäß einer noch weiteren Ausführungsform,
- Fig. 21: eine Unteransicht eines Formkörpers gemäß Fig. 20,
- Fig. 22: eine Längsschnittdarstellung eines Formkörpers gemäß Fig. 20 und 21,
- Fig. 23: eine perspektivische Darstellung eines erfindungsgemäßen Formkörpers von einer Unterseite gemäß einer noch weiteren Ausführungsform,
- Fig. 24: eine Unteransicht eines Formkörpers gemäß Fig. 23,
- Fig. 25: eine Längsschnittdarstellung eines Formkörpers gemäß Fig. 23 und 24,
- Fig. 26: eine perspektivische Darstellung eines erfindungsgemäßen Formkörpers von einer Unterseite gemäß einer noch weiteren Ausführungsform,
- Fig. 27: eine Unteransicht eines Formkörpers gemäß Fig. 26,
- Fig. 28: eine Längsschnittdarstellung eines Formkörpers gemäß Fig. 26 und 27,
- Fig. 29: eine perspektivische Darstellung eines erfindungsgemäßen Formkörpers von einer Unterseite gemäß einer noch weiteren Ausführungsform,
- Fig. 30: eine Unteransicht eines Formkörpers gemäß Fig. 29,
- Fig. 31: eine Längsschnittdarstellung eines Formkörpers gemäß Fig. 29 und 30,
- Fig. 32: eine perspektivische Darstellung eines erfindungsgemäßen Formkörpers von einer Unterseite gemäß einer noch weiteren Ausführungsform,
- Fig. 33: eine Unteransicht eines Formkörpers gemäß Fig. 32,
- Fig. 34: eine Längsschnittdarstellung eines Formkörpers gemäß Fig. 32 und 33.

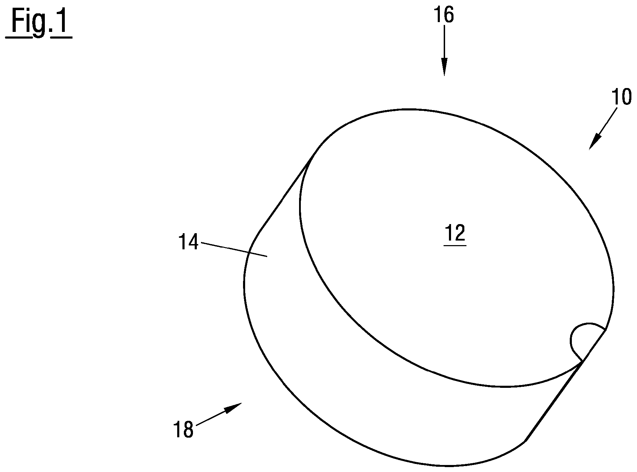

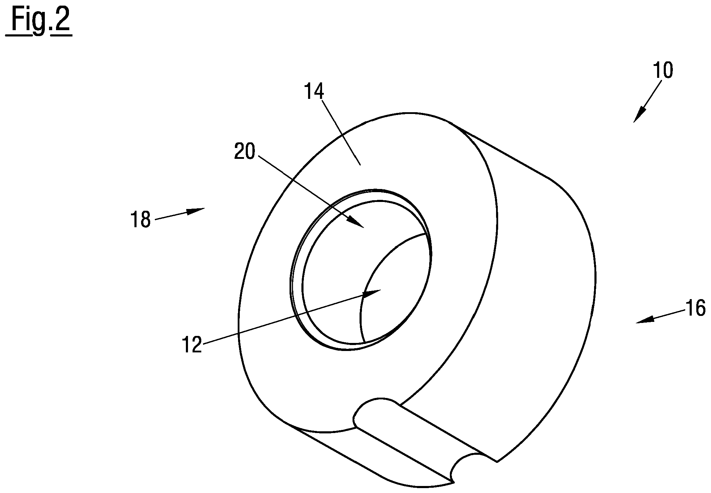

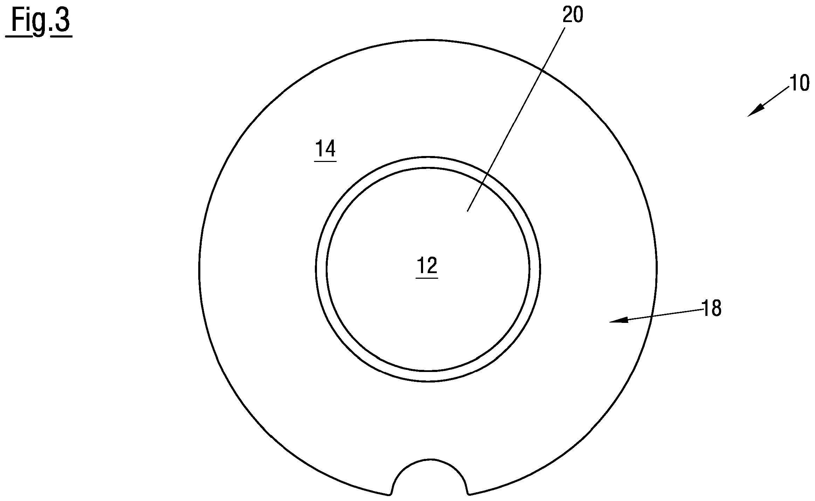

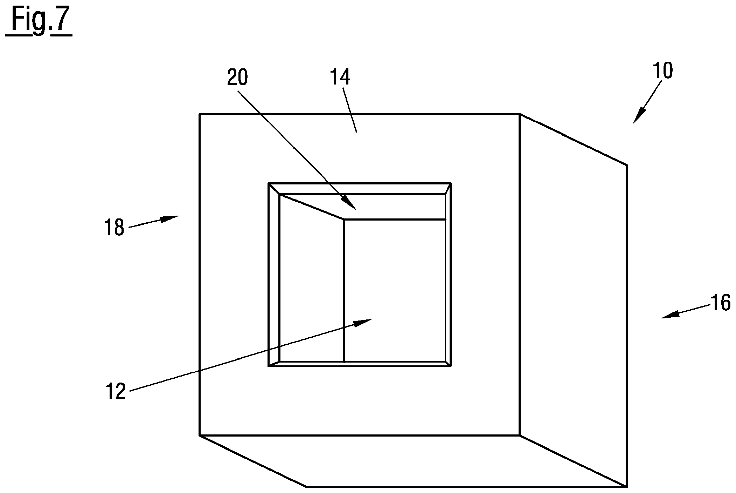

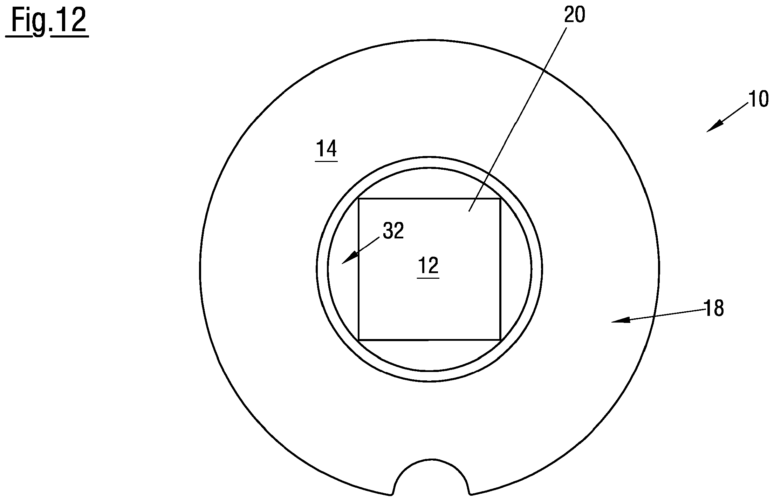

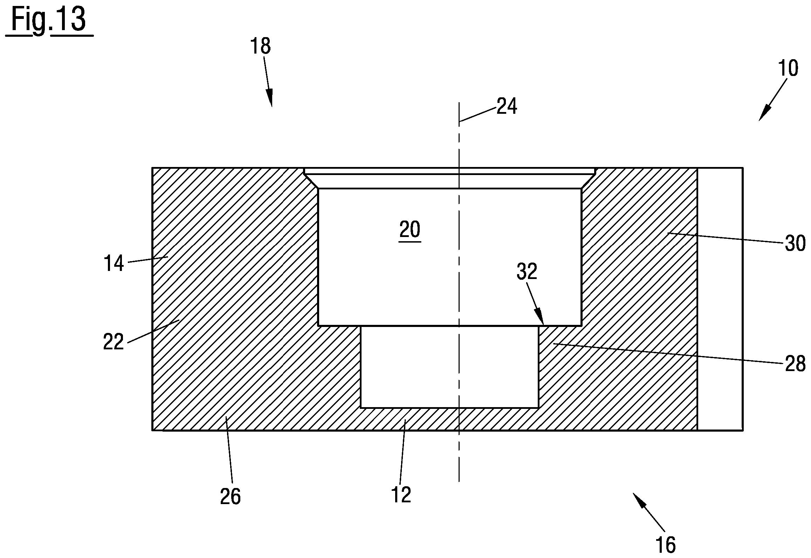

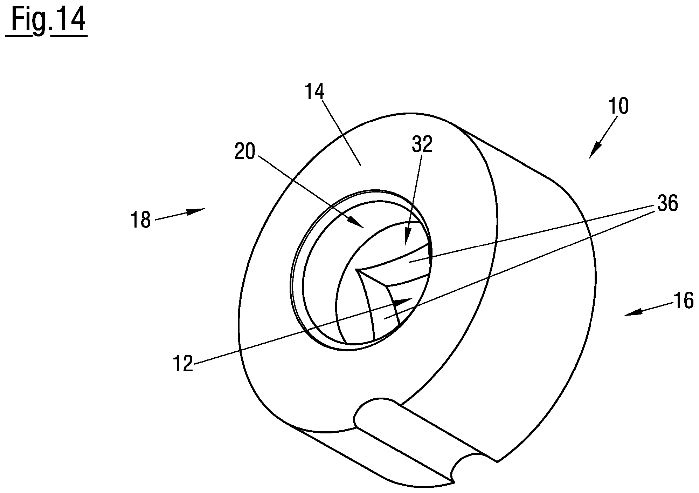

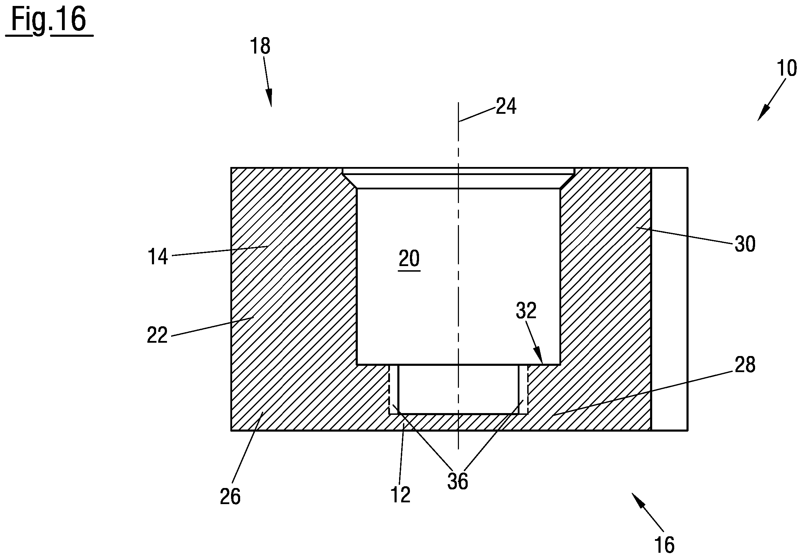

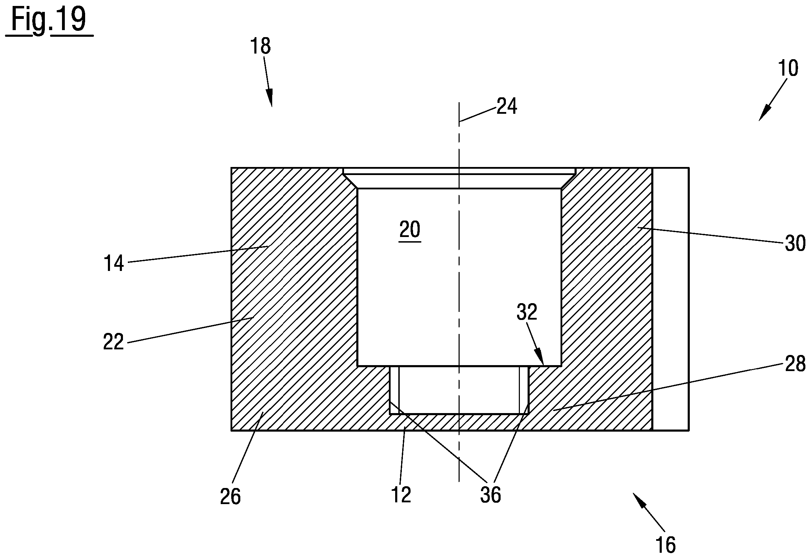

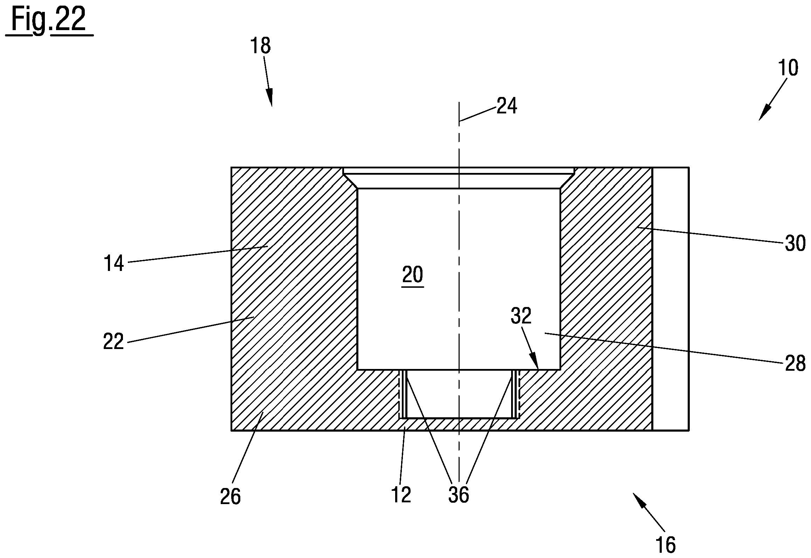

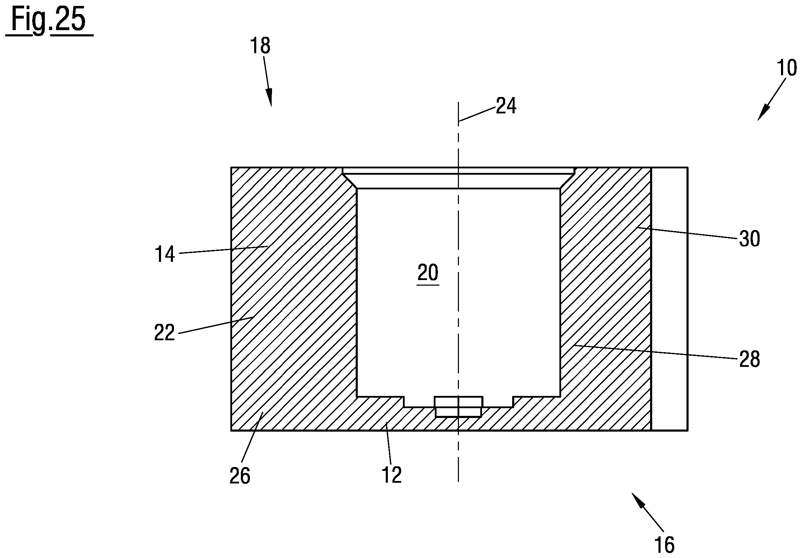

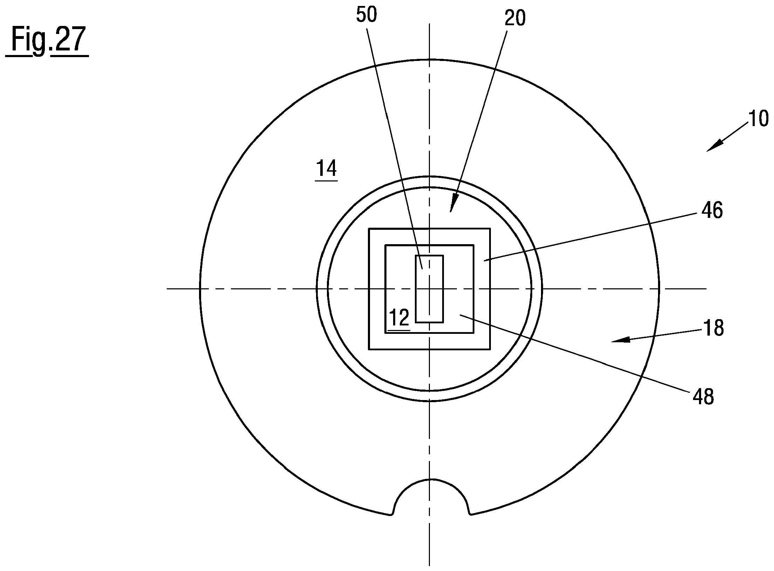

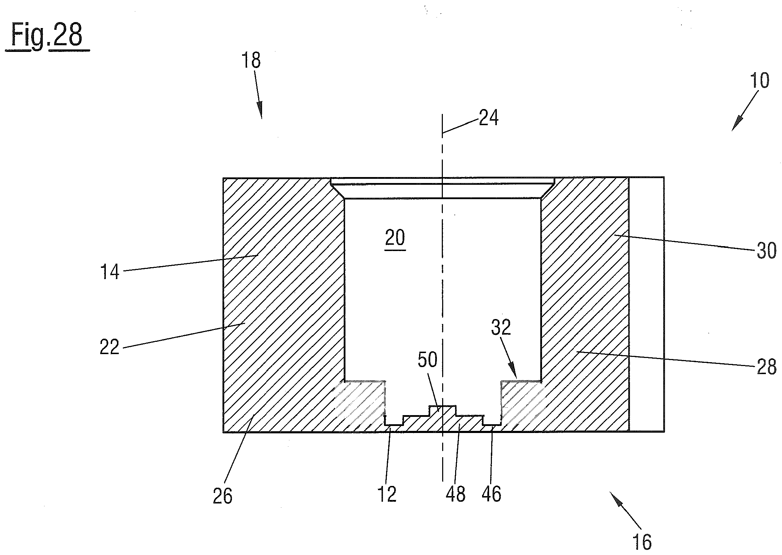

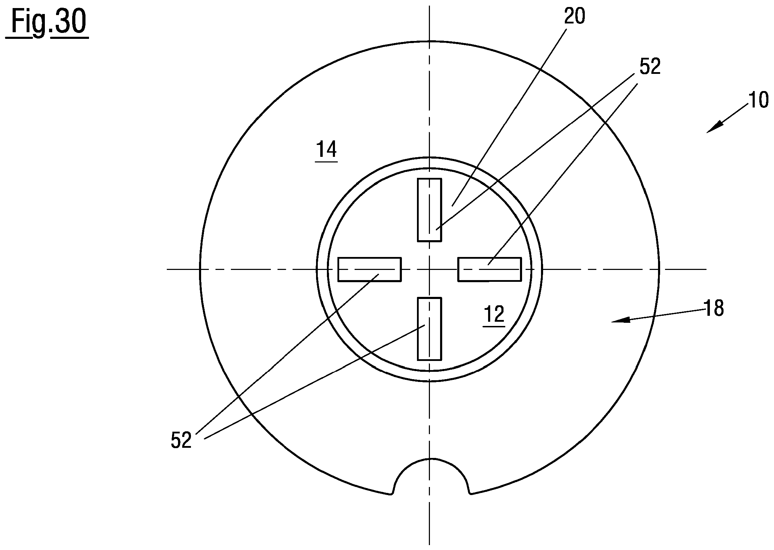

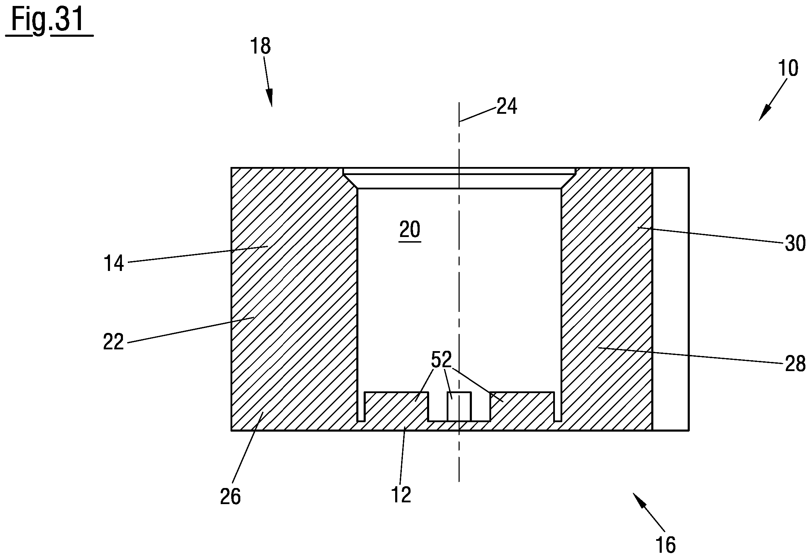

Die Fig. 1 und 2 zeigen perspektivische Darstellungen eines erfindungsgemäßen Formkörpers 10 gemäß einer Ausführungsform der Erfindung. Die Fig. 3 bis 6 zeigen weitere Darstellungen des Formkörpers 10 gemäß der Ausführungsform in Fig. 1 und 2. Weitere Ausführungsformen des Formkörpers 10 sind in den Fig. 7 bis 13 sowie auch in den Figuren 14 bis 34 dargestellt.

Ein in den Fig. 1 bis 34 dargestellter Formkörper 10 eignet sich insbesondere für den Einsatz in Drucksensoren für die Messung von Fluiddrücken. Bei dem Formkörper 10 handelt es sich in vorteilhafter Weise um einen Sensorkörper, insbesondere um einen Sensorkörper für einen Drucksensor.

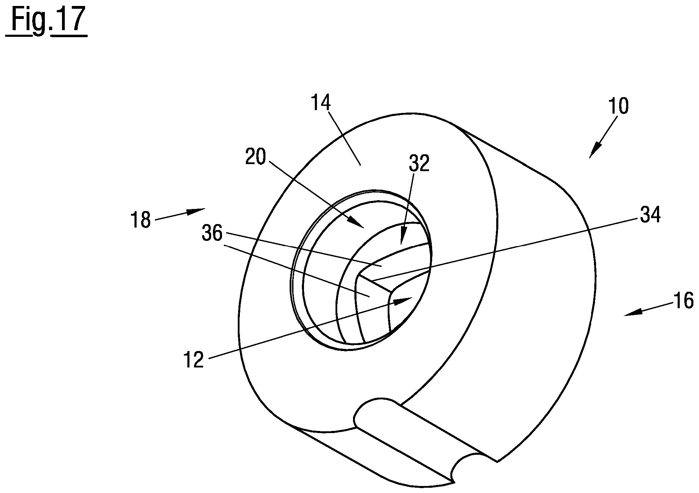

Wie den Fig. 1 bis 34 entnommen werden kann, weist der Formkörper 10 eine Membran 12 sowie einen die Membran tragenden Tragabschnitt 14 auf. In der beispielhaften Ausführungsform gemäß Fig. 1 bis 6 ist die Membran 12 kreisrund ausgebildet. Die Ausführungsformen gemäß Fig. 7 bis 34 unterscheiden sich von der Ausführungsform gemäß Fig. 1 bis 6 im Wesentlichen durch die Form der Membran 12 und/oder durch die Anzahl der Membrane, was nachfolgend noch näher erläutert wird. Beispielsweise ist gemäß den Figuren 7 bis 16 eine Membran 12 mit eckiger Außenumfangsform vorgesehen. Gemäß den Figuren 17 bis 34 sind weitere Membranformen beziehungsweise Membranausgestaltungen vorgesehen.

Die Membran 12 kann zumindest abschnittsweise mittels additiver Fertigung, insbesondere mittels 3D-Siebdruck, hergestellt sein. Ebenso kann der Tragabschnitt 14 mittels additiver Fertigung, insbesondere 3D-Siebdruck, hergestellt sein. Die Membran 12 und der Tragabschnitt 14 sind bevorzugt einstückig ausgebildet und/oder bilden einen monolithischen Körper.

In bevorzugter Weise sind die Membran 12 und/oder der Tragabschnitt 14 vollständig mittels 3D-Siebdruck hergestellt. Die Membran 12 und/oder der Tragabschnitt 14 können ferner ausschließlich mittels 3D-Siebdruck, insbesondere frei von mechanischen Nachbearbeitungen, hergestellt sein.

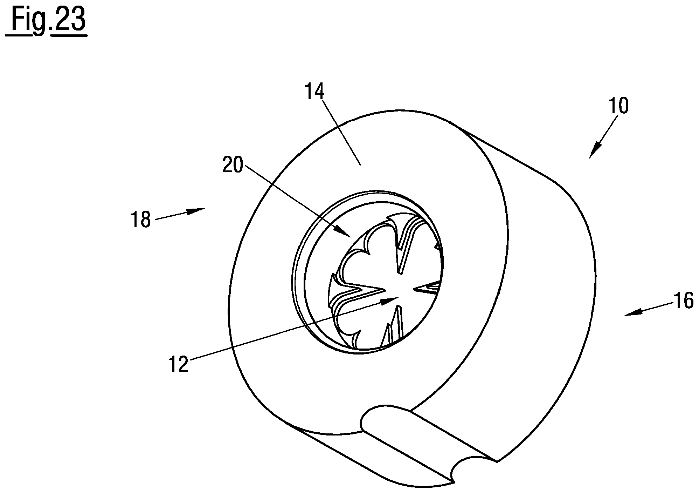

Die Membran 12 weist zumindest abschnittsweise eine Dicke von weniger als 0,5 mm auf, besonders bevorzugt von weniger als 0,4, weniger als 0,35, weniger als 0,3, weniger als 0,25, bevorzugt von weniger als 0,225 und insbesondere von weniger als 0,2 mm auf. Ebenso kann die Membran zumindest abschnittsweise eine Dicke von mehr als 0,1 mm, bevorzugt von mehr als 0,15 mm, weiter bevorzugt von mehr als 0,175 mm oder mehr als 0,2 mm, aufweisen. Gemäß den Ausführungsformen in den Figuren 23 bis 31 können abschnittsweise auch größere Dicken vorgesehen sein, was nachfolgend noch beschrieben wird.

An einer Oberseite 16 des Formkörpers 10 schließt der Tragabschnitt 14 bündig mit der Membran 12 ab. Demgegenüber steht an einer Unterseite 18 des Formkörpers 10 der Tragabschnitt 14 gegenüber der Membran 12 vor, so dass im Inneren des Tragabschnitts 14 ein Hohlraum 20 gebildet wird. Der Hohlraum 20 wird zur Oberseite 16 des Formkörpers 10 durch die Membran 12 begrenzt. An der Unterseite 18 des Formkörpers 10 ist der Hohlraum 20 offen.

Bei der Oberseite 16 kann es sich um eine medienabgewandte Seite handeln. Bei der Unterseite 18 kann es hingegen um eine medienzugewandte Seite beziehungsweise um eine Medienseite des Formkörpers 10 handeln.

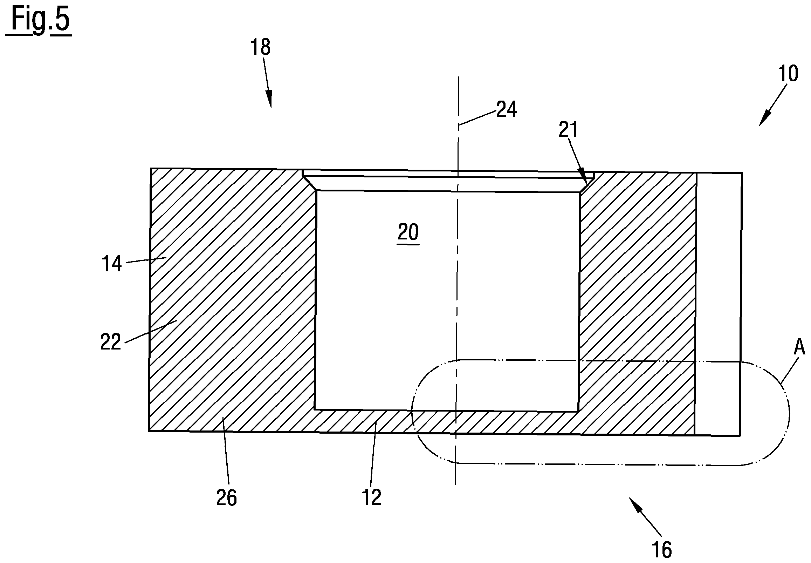

An der medienzugewandten Unterseite 18 kann eine Aufnahme 21 für einen Dichtring beziehungsweise O-Ring ausgebildet sein, was der Längsschnittdarstellung der Fig. 5 entnommen werden kann. Die Aufnahme 21 ist bevorzugt an einem Innenumfang des Tragabschnitts 14 ausgebildet. Die Aufnahme 21 kann insbesondere als ringsherum verlaufende Abschrägung oder Fase ausgebildet sein.

Die Membran 12 kann in vorteilhafterweise Weise durch mindestens drei Schichten, die im Wege des 3D-Siebdruckverfahrens gedruckt werden, bestehen. Bevorzugt kann die Membran 12 aus höchstens fünfzehn Schichten bestehen. Gemäß den Ausführungsformen in den Figuren 23 bis 31 können abschnittsweise auch mehr als fünfzehn Schichten vorgesehen sein, was nachfolgend noch beschrieben wird.

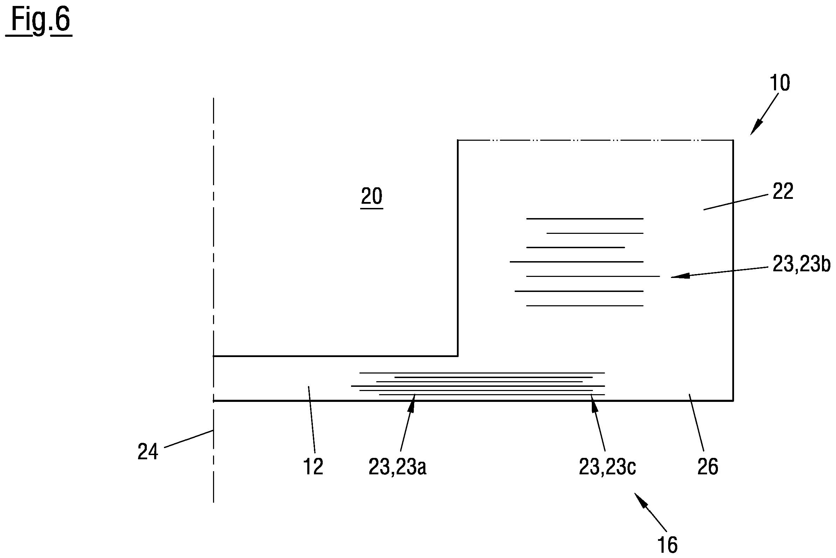

In Fig. 6 sind schematische unterschiedlicher Schichten 23 der Membran 12 sowie des Tragabschnitts 14 gezeigt. Die Dicke der einzelnen Schichten 23a der Membran 12 kann geringer sein als die Dicke zumindest einer Schicht 23b des Tragabschnitts 14. Dies gilt insbesondere für Bereiche 22 des Tragabschnitts 14, die entlang einer Höhenrichtung 24 beziehungsweise entlang einer Längserstreckung des Formkörpers 10 gegenüber der Membran 12 vorstehen.

In Fig. 6 ist ferner zu sehen, dass Bereiche 26 des Tragabschnitts 14, welche die Membran 12 in Umfangsrichtung umgeben, eine identische Schichtdicke aufweisen können wie die jeweiligen Schichtdicken der Membran 12. Insbesondere können die jeweiligen Schichten 23a der Membran 12 durchgängig mit den Schichten 23c zur Erzeugung des Bereichs 26 des Tragabschnitts 14, welcher die Membran 12 in Umfangsrichtung umgibt, erzeugt sein. Obwohl nicht näher dargestellt, kann eine solche Ausbildung der Schichten bei allen Ausführungsformen vorgesehen sein.

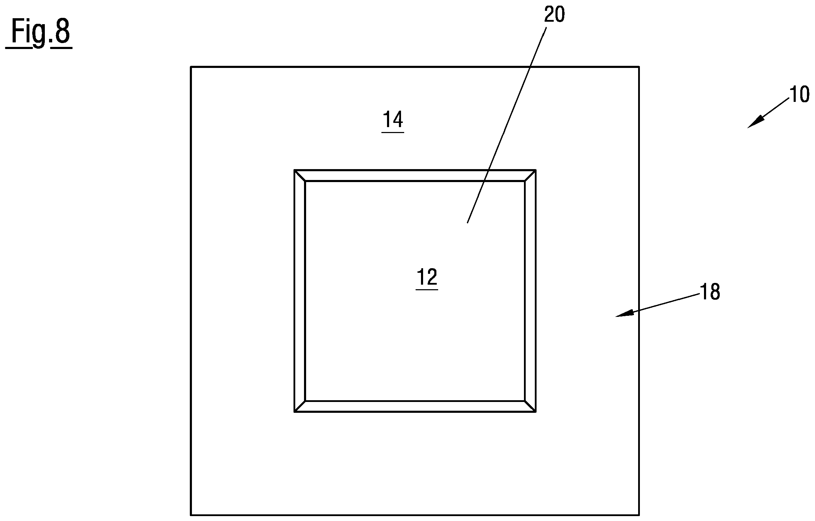

Wie voranstehend erwähnt kann der Tragabschnitt 14 die Membran 12 umgeben, insbesondere ringsherum umgeben. Der Tragabschnitt 14 kann dabei kreisrund ausgebildet sein, insbesondere eine kreisrunde Außenumfangsform aufweisen, wie beispielsweise in den Fig. 1 bis 4 und 9 bis 34 gezeigt. Die kreisrunde Außenumfangsform kann durch eine Einbuchtung am Außenumfang unterbrochen sein. Ebenso kann der Tragabschnitt 14 eine eckige Außenumfangsform aufweisen, wie beispielsweise in Fig. 7 und 8 gezeigt. Obwohl nicht näher dargestellt, können die Ausführungsformen gemäß Fig. 1 bis 4 und 9 bis 34 ebenfalls mit einer eckigen Außenumfangsform des Tragabschnitts 14 vorgesehen sein.

Die Innenumfangsform des Tragabschnitts 14 kann zumindest abschnittsweise mit der Außenumfangsform der Membran 12 korrespondieren. Bei kreisrunder Au-βenumfangsform der Membran 12 kann auch die Innenumfangsform des Tragabschnitts 14 zumindest abschnittsweise kreisrund ausgebildet sein, wie beispielsweise in Fig. 1 bis 4 gezeigt. Bei eckiger Außenumfangsform der Membran 12 kann auch die Innenumfangsform des Tragabschnitts 14 zumindest abschnittsweise eckig ausgebildet sein, wie beispielsweise in Fig. 7 bis 12 gezeigt.

Die Membran 12 kann bei kreisrunder Ausbildung gemäß Fig. 1 bis 6 einen Durchmesser aufweisen, der kleiner als 18 mm, bevorzugt kleiner als 16 mm, weiter bevorzugt etwa 15 mm, weiter bevorzugt kleiner als 15 mm, weiter bevorzugt kleiner als 12 mm, weiter bevorzugt kleiner als 10 mm, weiter bevorzugt kleiner als 8 mm, weiter bevorzugt kleiner als 6 mm, weiter bevorzugt kleiner als 4,5 mm, noch weiter bevorzugt kleiner als 4 mm, ist.

Bei rechteckigen beziehungsweise quadratischen Membranaußenumfangsformen gemäß Fig. 7 bis 13 können sich die voranstehenden Werte auf eine mögliche Diagonale der Membran 12 beziehen, insbesondere eine Diagonale in Draufsicht auf die Membran 12. Dies kann entsprechend auch für die weiteren in den Fig. 14 bis 34 gezeigten Membranformen der Fall sein.

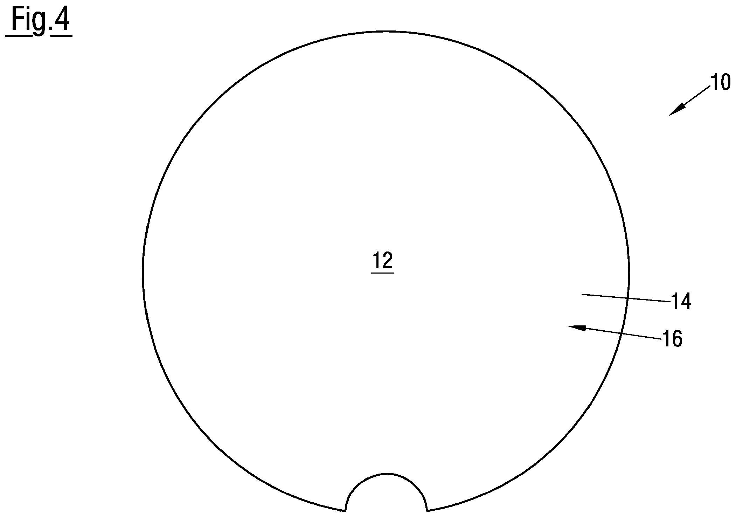

In einem Querschnitt beziehungsweise in einer Unteransicht von der Unterseite 18 auf den Tragabschnitt, wie beispielsweise in den Fig. 3, 10, 12, 15, 18, 21, 24, 27, 30 und 33 gezeigt, und/oder in einer Oberansicht von der Oberseite 16, wie beispielsweise in Fig. 4 gezeigt, kann ein Außendurchmesser des Tragabschnitts kleiner sein als 25 mm, bevorzugt kleiner als 22 mm, weiter bevorzugt kleiner als 20 mm, weiter bevorzugt kleiner als 15 mm, weiter bevorzugt kleiner als 12 mm, weiter bevorzugt kleiner als 10 mm, noch weiter bevorzugt kleiner als 9,5 mm, noch weiter bevorzugt etwa 9 mm oder kleiner als 9 mm.

Bei rechteckigen oder quadratischen Außenumfangsformen des Tragabschnitts 14, wie in Fig. 7 und 8 gezeigt, können sich die voranstehenden Werte auf eine Diagonale beziehen, insbesondere in Oberansicht auf den Formkörper 10 und/oder in einer Unteransicht auf den Formkörper 10.

In der Ausführungsform gemäß Fig. 7 und 8 weist die Membran 12 eine quadratische Außenumfangsform auf. Der Tragabschnitt 14 weist sowohl eine quadratische Außenumfangsform als auch eine quadratische Innenumfangsform auf. Die quadratische Innenumfangsform verläuft gleichbleibend entlang der Längserstreckung des Tragabschnitts 14.

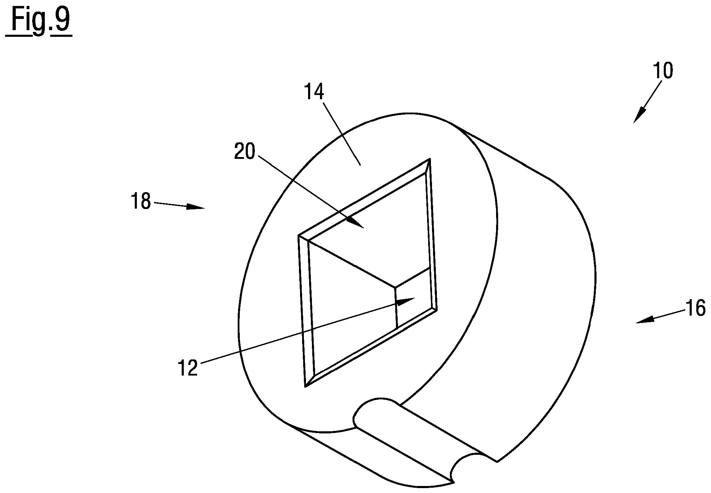

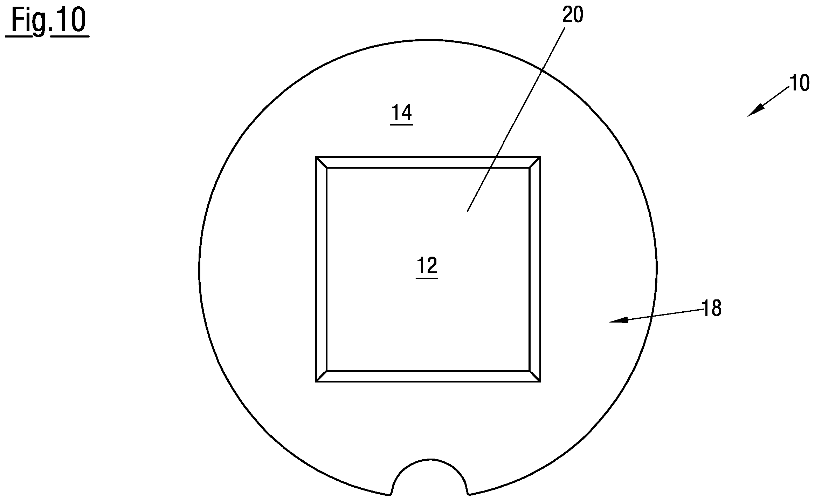

In der Ausführungsform gemäß Fig. 9 und 10 weist die Membran 12 ebenfalls eine quadratische Außenumfangsform auf. Der Tragabschnitt 14 weist eine quadratische Innenumfangsform aber eine kreisrunde Außenumfangsform auf. Die quadratische Innenumfangsform verläuft gleichbleibend entlang der Längserstreckung des Tragabschnitts 14.

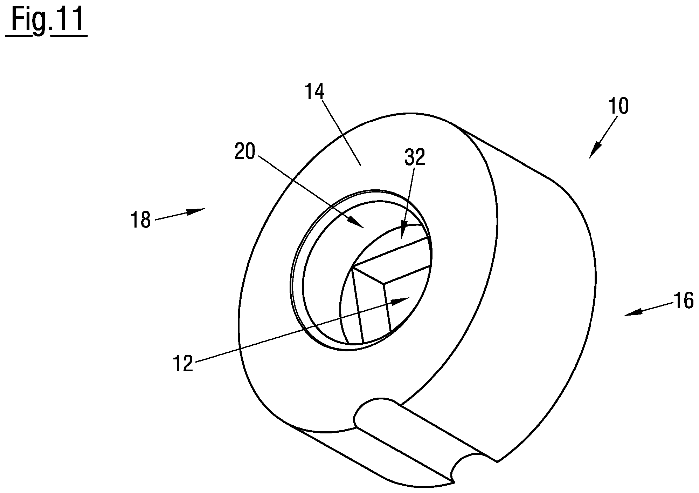

In der Ausführungsform gemäß Fig. 11 bis 13 weist die Membran 12 ebenfalls eine quadratische Außenumfangsform auf. Der Tragabschnitt 14 weist eine kreisrunde Außenumfangsform und entlang seiner Längserstreckung unterschiedliche Innenumfangsformen auf. So ist die Innenumfangsform des Tragabschnitts 14 in einem Abschnitt 28, der die Membran 12 umgibt, quadratisch ausgebildet. Der Abschnitt 28 mit der quadratischen Innenumfangsform steht in Höhenrichtung 24 über die Membran 12 vor. An den Abschnitt 28 mit der quadratischen Innenumfangsform schließt sich ein Abschnitt 30 mit kreisrunder Innenumfangsform an. Hierdurch ergibt sich am Innenumfang des Tragabschnitts 14 eine Stufe 32.

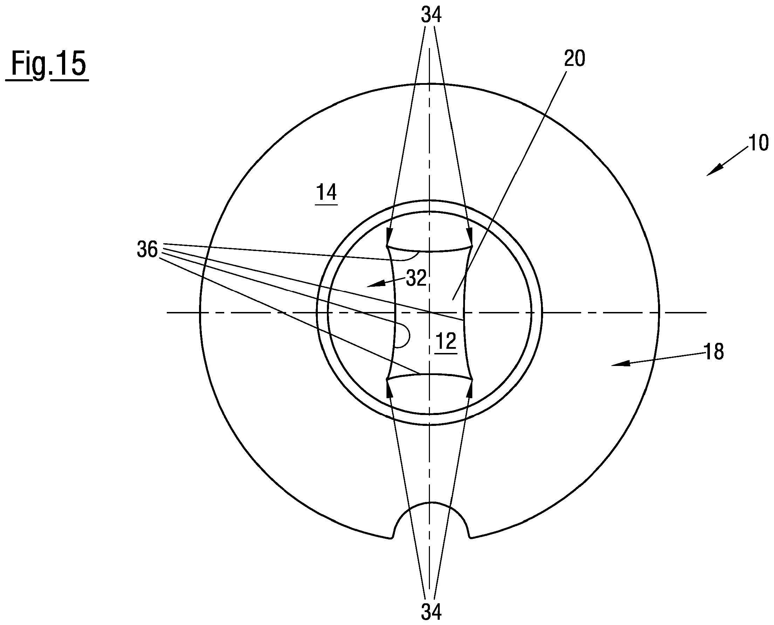

Die Ausführungsform in den Fig. 14 bis 16 unterscheidet sich von der Ausführungsform in den Fig. 11 bis 13 in Bezug auf die Außenumfangsform der Membran 12 beziehungsweise hinsichtlich der Innenumfangsform des Abschnitts 28 des Tragabschnitts 14. Gemäß der Ausführungsform in den Fig. 14 bis 16 weist die Membran 12 ebenfalls eine eckige Außenumfangsform beziehungsweise eine Au-βenumfangsform mit Ecken 34 auf. Die zwischen den Ecken 34 verlaufende Begrenzung der Membran 12 ist jedoch gewölbt beziehungsweise weist eine gebogene Form auf, wie insbesondere der Fig. 15 entnommen werden kann. Die zwischen den Ecken 34 verlaufende Begrenzung der Membran 12 ist gemäß den Fig. 14 bis 16 nach innen gewölbt. Folglich weist der Abschnitt 28 des Tragabschnitts 14 nach innen gewölbte Wandabschnitte 36 auf. In einer Unteransicht gemäß Fig. 15 ergibt sich somit eine Membran 12 mit einer eckigen Formgebung sowie seitlichen Einschnürungen. Durch eine derartige Form der Membran 12 können anwendungsspezifisch vorteilhafte Eigenschaften erzielt werden.

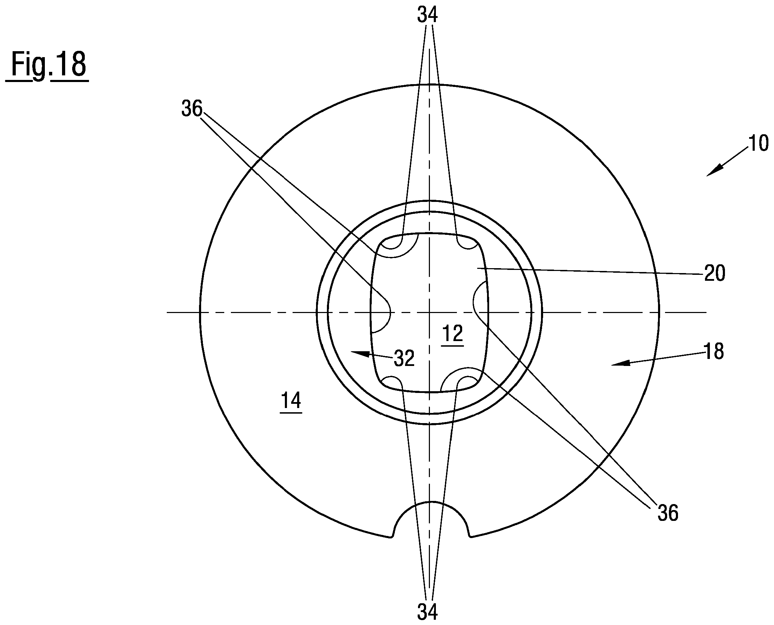

Die Ausführungsform in den Fig. 17 bis 19 unterscheidet sich von der Ausführungsform in den Fig. 14 bis 16 in Bezug auf die Außenumfangsform der Membran 12 beziehungsweise hinsichtlich der Innenumfangsform des Abschnitts 28 des Tragabschnitts 14. Gemäß der Ausführungsform in den Fig. 17 bis 19 weist die Membran 12 ebenfalls eine eckige Außenumfangsform beziehungsweise eine Au-βenumfangsform mit Ecken 34 beziehungsweise abgerundeten Ecken 34 auf. Die zwischen den Ecken 34 beziehungsweise abgerundeten Ecken 34 verlaufende Begrenzung der Membran 12 ist auch gewölbt beziehungsweise weist eine gebogene Form auf, wie insbesondere der Fig. 18 entnommen werden kann.

Die zwischen den Ecken 34 verlaufende Begrenzung der Membran 12 ist gemäß den Fig.17 bis 19 jedoch - anders als in der Ausführungsform gemäß Fig. 14 bis 16 - nach außen gewölbt. Folglich weist der Abschnitt 28 des Tragabschnitts 14 nach außen gewölbte Wandabschnitte 36 auf. In einer Unteransicht gemäß Fig. 18 ergibt sich somit eine Membran 12 mit einer abgerundet eckigen Formgebung sowie seitlichen Auswölbungen. Durch eine derartige Form der Membran 12 können anwendungsspezifisch vorteilhafte Eigenschaften erzielt werden.

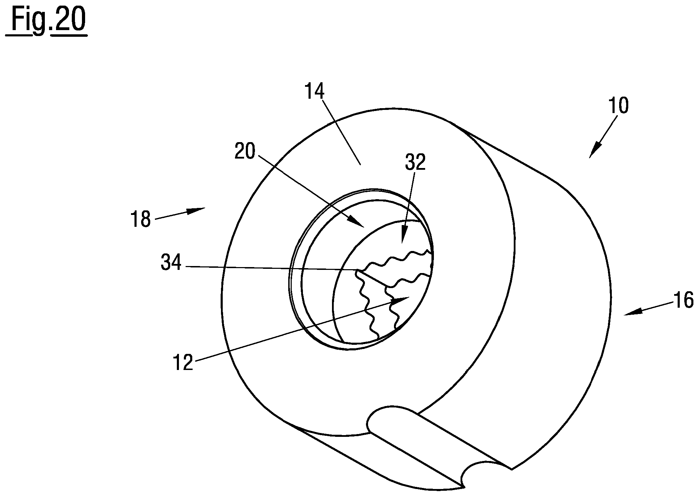

Die Ausführungsform in den Fig. 20 bis 22 unterscheidet sich von der Ausführungsform in den Fig. 14 bis 19 in Bezug auf die Außenumfangsform der Membran 12 beziehungsweise hinsichtlich der Innenumfangsform des Abschnitts 28 des Tragabschnitts 14. Gemäß der Ausführungsform in den Fig. 20 bis 22 weist die Membran 12 ebenfalls eine eckige Außenumfangsform beziehungsweise eine Au-βenumfangsform mit Ecken 34 auf.

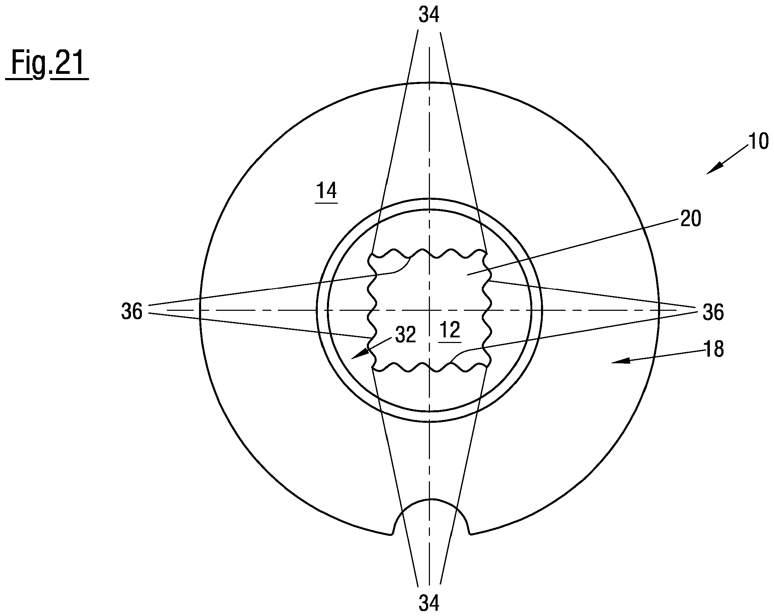

Die zwischen den Ecken 34 verlaufende Begrenzung der Membran 12 ist gemäß den Fig. 20 bis 22 jedoch gewellt beziehungsweise weist eine gewellte Form auf, wie insbesondere der Fig. 21 entnommen werden kann. Folglich weist der Abschnitt 28 des Tragabschnitts 14 gewellte und/oder wellig verlaufende Wandabschnitte 36 auf. In einer Unteransicht gemäß Fig. 21 ergibt sich somit eine Membran 12 mit einer insgesamt eckigen Formgebung sowie einer seitlichen Wellenbegrenzung beziehungsweise seitlichen Wellenformgebung.

Anstelle der seitlichen Wellenbegrenzung beziehungsweise seitlichen Wellenformgebung können auch gezackte oder zackenartige Begrenzungen der Membran 12 vorgesehen sein. In diesem Fall ist die Membran 12 zwischen den Ecken 34 durch eine gezackte Begrenzung definiert. Derartige Formgebungen können anwendungsspezifisch vorteilhafte Eigenschaften sicherstellen.

Die Ausführungsform in den Fig. 23 bis 25 unterscheidet sich von den Ausführungsform in den Fig. 1 bis 6 in Bezug auf die Ausgestaltung der Membran 12. Gemäß der Ausführungsform in den Fig. 23 bis 25 weist die Membran 12 ebenfalls eine kreisrunde Außenumfangsform auf, ist jedoch mit einer Höhen- beziehungsweise Dickenstrukturierung versehen. Hierunter können Variationen der Dicke beziehungsweise der Erstreckung der Membran 12 in Höhenrichtung 24 verstanden werden. Die Membran 12 gemäß Fig. 23 bis 25 weist demgemäß Abschnitte mit unterschiedlichen Dicken beziehungsweise mit unterschiedlichen Stärken in Höhenrichtung 24 des Formkörpers 10 auf.

Membranabschnitte mit größeren Dicken beziehungsweise größeren Stärken oder Erstreckungen in Höhenrichtung 24 können dementsprechend durch eine größere Anzahl an Schichten und/oder durch größere Schichtdicken erzeugt sein als Membranabschnitte mit geringeren Dicken beziehungsweise geringeren Stärken oder Erstreckungen in Höhenrichtung 24.

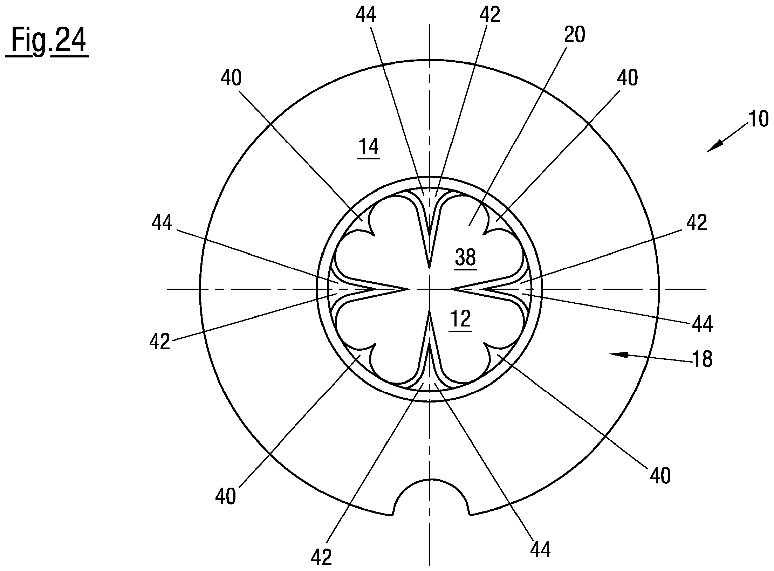

Es kann den Fig. 23 bis 25 entnommen werden, dass die Membran 12 einen Innenabschnitt 38 mit verhältnismäßig geringer Dicke aufweist. Der Innenabschnitt 38 ist durch eine Mehrzahl von Außenabschnitten 40 und 42 mit größerer Dicke umgeben. Der Innenabschnitt 38 kann in einer Unteransicht gemäß Fig. 24 eine kleeblattartige Form beziehungsweise eine kleeblattartige Außenkontur aufweisen. Die Außenabschnitte 40 und 42 mit größerer Dicke können in den Innenabschnitt 38 hineinragen und somit eine Stützstruktur bilden. Das Nachgiebigkeitsverhalten der Membran 12 kann auf diese Weise beeinflusst werden.

Die Außenabschnitte 40 und 42 können so bemessen sein, dass diese im Betrieb selber eine Nachgiebigkeit aufweisen beziehungsweise eine im Betrieb messbare Flexibilität gewährleisten. Die Außenabschnitte 40 können eine gleichbleibende Dicke aufweisen. Die Außenabschnitte 42 können wiederum gestuft ausgebildet sein und damit zwei unterschiedliche Dickenbereiche aufweisen. Die Bereiche der Außenabschnitte 42 mit größerer Dicke können jeweils durch einen Fortsatz 44 in Höhenrichtung 24 gebildet sein. Gemäß Fig. 23 bis 25 kann die Dicke der Membran 12 vom Außenumfang zur Membranmitte schrittweise reduziert sein. Die Au-βenabschnitte 40 und 42 können nach Art einer Blattfeder eine Stützfunktionalität für den Innenabschnitt 38 gewährleisten.

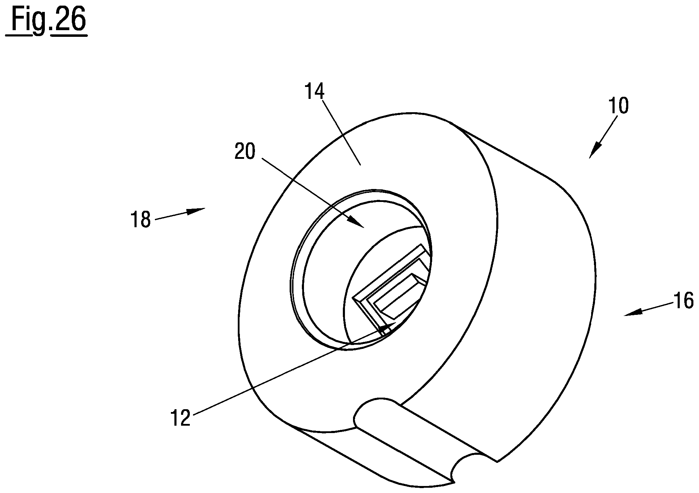

Die Ausführungsform in den Fig. 26 bis 28 unterscheidet sich von der Ausführungsform in den Fig. 11 bis 13 in Bezug auf die Ausgestaltung der Membran 12. Gemäß der Ausführungsform in den Fig. 26 bis 28 weist die Membran 12 ebenfalls eine eckige Außenumfangsform auf, ist jedoch wiederum mit einer Höhen- beziehungsweise Dickenstrukturierung versehen. Wie voranstehend erwähnt können hierunter Variationen der Dicke beziehungsweise der Erstreckung der Membran 12 in Höhenrichtung 24 verstanden werden. Die Membran 12 gemäß Fig. 26 bis 28 weist demgemäß Abschnitte mit unterschiedlichen Dicken beziehungsweise mit unterschiedlichen Stärken in Höhenrichtung 24 des Formkörpers 10 auf.

Es kann den Fig. 26 bis 28 entnommen werden, dass die Membran 12 einen Au-βenabschnitt 46 mit verhältnismäßig geringer Dicke aufweist. Der Außenabschnitt 46 umgibt ferner einen Innenabschnitt 48 mit größerer Dicke. Der Innenabschnitt 48 kann dabei unterschiedliche Dicken aufweisen. Insbesondere kann der Innenabschnitt 48 mit einem weiter verdickten Zentralabschnitt 50 versehen sein. Der Zentralabschnitt 50 kann durch einen klotzartigen Vorsprung in Höhenrichtung 24 gebildet sein. Der Innenabschnitt 48 und/oder der Zentralabschnitt 50 können eine Stützstruktur für die gesamte Membran 12 beziehungsweise für den Außenabschnitt 46 der Membran 12 bilden. Das Nachgiebigkeitsverhalten der Membran 12 kann auf diese Weise beeinflusst werden.

Der Innenabschnitt 48 und/oder der Zentralabschnitt 50 können so bemessen sein, dass diese im Betrieb selber eine Nachgiebigkeit aufweisen beziehungsweise eine im Betrieb messbare Flexibilität gewährleisten. Ebenso ist es möglich, dass der Zentralabschnitt 50 eine lokale Versteifung der Membran 12 bildet und lediglich der verbleibende Teil des Innenabschnitts 48 für eine Nachgiebigkeit im Betrieb bemessen und/oder ausgelegt ist. Das Nachgiebigkeitsverhalten der Membran 12, insbesondere des verbleibenden Teils des Innenabschnitts 48 sowie des Außenabschnitts 46, kann auf diese Weise beeinflusst werden.

Dementsprechend kann die Dicke der Membran 12 gemäß Fig. 26 bis 28 vom Au-βenumfang zur Membranmitte schrittweise erhöht sein. Insbesondere der Innenabschnitt 46 und/oder der Zentralabschnitt 50 können nach Art einer Blattfeder eine Stützfunktionalität für den Außenabschnitt 46 gewährleisten.

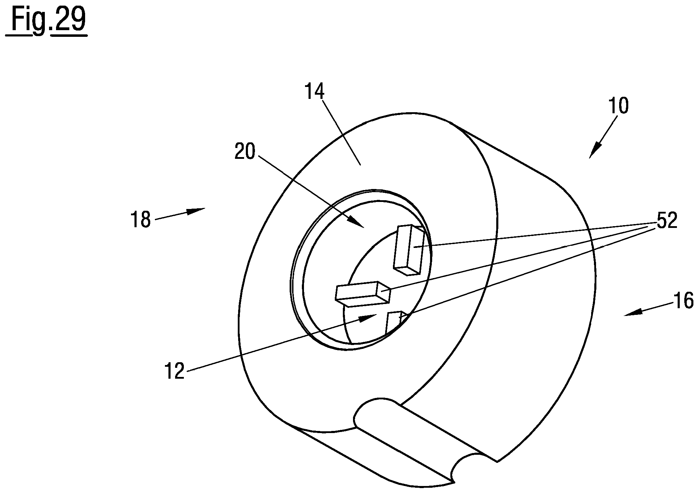

Die Ausführungsform in den Fig. 29 bis 31 unterscheidet sich von den Ausführungsform in den Fig. 1 bis 6 in Bezug auf die Ausgestaltung der Membran 12.

Gemäß der Ausführungsform in den Fig. 29 bis 31 weist die Membran 12 ebenfalls eine kreisrunde Außenumfangsform auf, ist jedoch wiederum mit einer Höhenbeziehungsweise Dickenstrukturierung versehen. Wie voranstehend erwähnt können hierunter Variationen der Dicke beziehungsweise der Erstreckung der Membran 12 in Höhenrichtung 24 verstanden werden. Die Membran 12 gemäß Fig. 29 bis 31 weist demgemäß Abschnitte mit unterschiedlichen Dicken beziehungsweise unterschiedlichen Erstreckungen in Höhenrichtung 24 des Formkörpers 10 auf.

Es kann den Fig. 29 bis 31 entnommen werden, dass die Membran 12 entlang einer Flächenerstreckung weitgehend eine verhältnismäßig geringe Dicke aufweist. An insgesamt vier definierten Stellen weist die Membran 12 hingegen lokal begrenzte Stützstrukturen 52 auf. Die Stützstrukturen 52 bilden Fortsätze in Höhenrichtung 24 des Formkörpers 10, sodass die Membran 12 im Bereich der Stützstrukturen 52 eine größere Erstreckung in Höhenrichtung 24 aufweist. Im Falle einer Auslenkung der Membran 12, beispielsweise im Zuge einer Druckmessung im Betrieb, können die Stützstrukturen 52 seitlich in Anlage an die Innenumfangsfläche des Tragabschnitts 14 gelangen und somit eine Auslenkungsbegrenzung gewährleisten. Das Auslenkungsverhalten der Membran 12 kann auf diese Weise geeignet beeinflusst und die Betriebssicherheit erhöht werden.

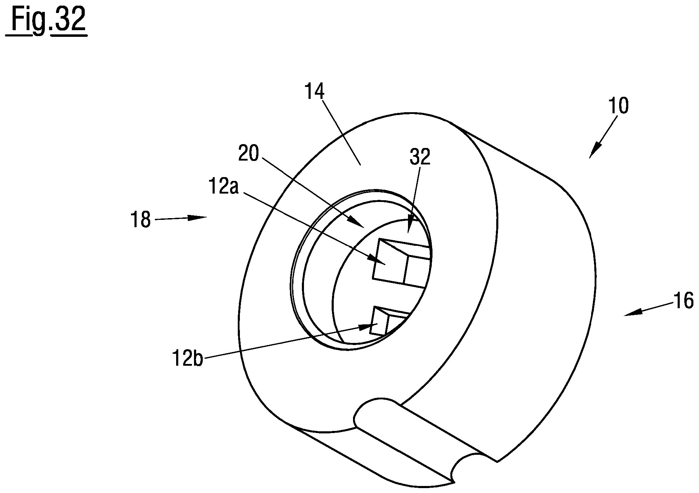

Die Ausführungsform in den Fig. 32 bis 34 unterscheidet sich von der Ausführungsform in den Fig. 11 bis 13 wiederum in Bezug auf die Membranausgestaltung. So sind gemäß der Ausführungsform in den Fig. 32 bis 34 zwei voneinander getrennt ausgebildete Membrane 12a und 12b vorgesehen. Der Tragabschnitt 14 gemäß Fig. 32 bis 34 weist entlang seiner Längserstreckung Abschnitte mit unterschiedlichen Innenumfangsformen auf, nämlich einen Abschnitt 28, der die Membrane 12a und 12b umgibt, sowie einen Abschnitt 30, der sich in Höhenrichtung 24 an den Abschnitt 28 anschließt. Hierdurch ergibt sich am Innenumfang des Tragabschnitts 14 wiederum eine Stufe 32.

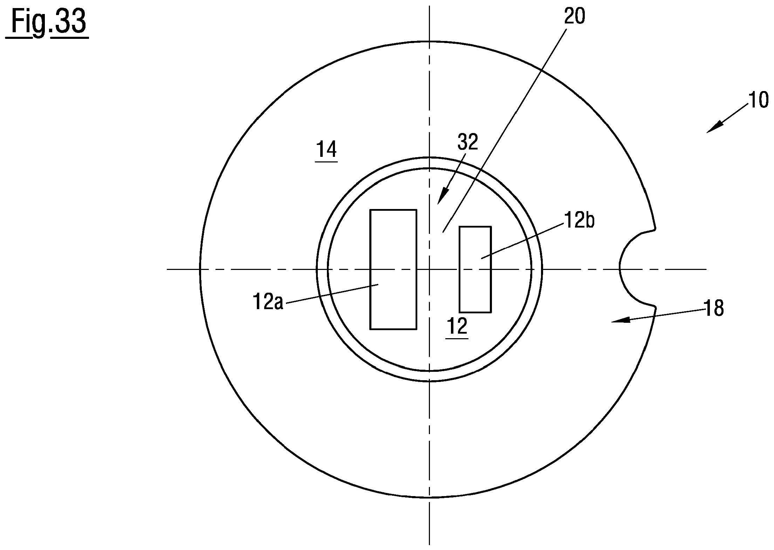

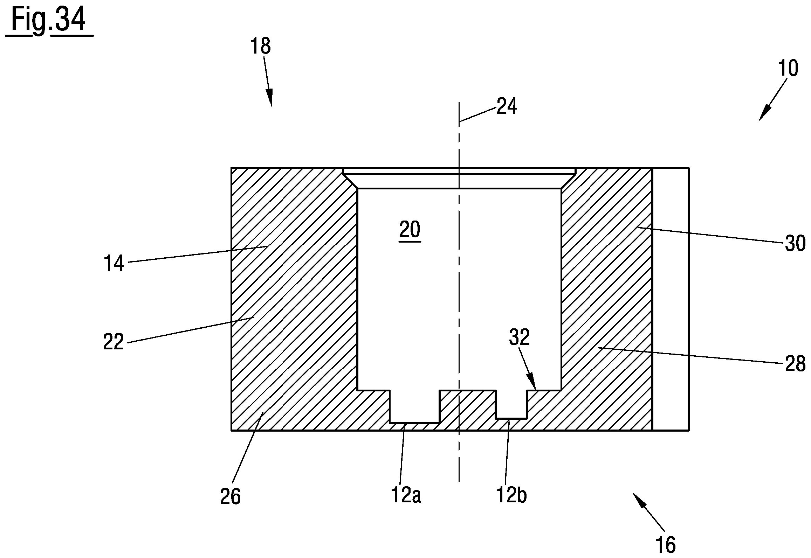

Der Abschnitt 30 des Tragabschnitts 14 weist eine kreisrunde Innenumfangsform auf. Demgegenüber weist der Abschnitt 28 des Tragabschnitts Aussparungen auf, welche die Außenumfangsformen der Membrane 12a und 12b definieren. Die Membrane 12a und 12b können dabei unterschiedliche Größen, insbesondere in Flächenerstreckung, und/oder unterschiedliche Dicken aufweisen, was insbesondere den Fig. 33 und 34 entnommen werden kann. In der Ausführungsform gemäß Fig. 32 bis 34 können die Membrane 12a und 12b jeweils eine quadratische oder rechteckige Außenumfangsform aufweisen. Für die Membrane 12a und 12b sind jedoch auch andere Außenumfangsform realisierbar, beispielsweise die in Bezug auf die Fig. 14 bis 22 beschriebenen Membranaußenumfangsformen. Ferner kann auch eine größere Anzahl von Membranen vorgesehen sein. Insgesamt kann durch eine Ausgestaltung mit mehreren Membranen im Betrieb die Messfunktionalität erweitert werden, beispielsweise zur Abdeckung unterschiedlicher Messbereiche.

Der Formkörper 10 beziehungsweise der Tragabschnitt 14 kann - gemäß allen Ausführungsformen - eine Gesamthöhe, insbesondere in Höhenrichtung 24 oder entlang der Längserstreckung des Formkörpers 10, von weniger als 15 mm, bevorzugt weniger als 12 mm, weiter bevorzugt weniger als 10 mm, weiter bevorzugt weniger als 8 mm, weiter bevorzugt weniger als 6 mm, noch weiter bevorzugt weniger als 4 mm oder etwa 4 mm aufweisen. Ferner kann der Formkörper 10 beziehungsweise der Tragabschnitt 14 eine Gesamthöhe, insbesondere in Höhenrichtung 24 oder entlang einer Längserstreckung des Formkörpers 10, von mehr als 2 mm, weiter bevorzugt von mehr als 3 mm, aufweisen.

Der Formkörper 10 kann - gemäß allen Ausführungsformen - in bevorzugter Weise aus einem keramischen Werkstoff erzeugt sein, insbesondere aus einem Aluminiumoxid beziehungsweise aus einem Aluminiumoxid enthaltenden Werkstoff. Insbesondere kann die Membran 12 und/oder der Tragabschnitt 14 aus einem derartigen keramischen Werkstoff bestehen. Dabei können sich die Werkstoffe der Membran 12 sowie des Tragabschnitts 14 identisch sein oder voneinander unterscheiden. Es besteht die Möglichkeit, dass die Membran 12 sowie der Tragabschnitt 14 identische Grundstoffe aber unterschiedliche Zusatzstoffe aufweisen und somit eine voneinander abweichende Werkstoffkomposition aufweisen.

Ferner kann der Tragabschnitt 14 - gemäß allen Ausführungsformen - in unterschiedlichen Bereichen aus unterschiedlichen Werkstoffen beziehungsweise Werkstoffkompositionen bestehen. Der Bereich 22 des Tragabschnitts 14, welcher in Umfangsrichtung die Membran 12 umgibt, kann dabei aus demselben Werkstoff beziehungsweise derselben Werkstoffkomposition bestehen, wie die Membran 12. Demgegenüber kann der Tragabschnitt 14 in einem Bereich 26, der in Höhenrichtung 24 oder entlang der Längserstreckung des Formkörpers 10 gegenüber der Membran 12 vorsteht, aus einem anderen Werkstoff beziehungsweise einer anderen Werkstoffkomposition erzeugt sein.

Der Formkörper 10 lässt sich mit nur geringem Aufwand mittels additiver Fertigung, insbesondere mittels 3D-Siebdruck, fertigen. Etwaige Nachbearbeitungen, insbesondere mechanische Nachbearbeitungen, der Membran 12 können vermieden oder auf ein geringes Maß reduziert werden. So kann mittels additiver Fertigung die jeweils gewünschte Dicke beziehungsweise Beschaffenheit der Membran 12 unmittelbar erreicht werden, ohne dass es einer mechanischen Nachbearbeitung im Wege des Schleifens oder Läppens bedarf.

Durch eine einstückige Ausbildung der Membran 12 sowie des Tragabschnitt 14 können zudem nachträgliche Verbindungsschritte zwischen Membran 12 und Tragabschnitt 14 vermieden werden. Insgesamt kann auf diese Weise ein Formkörper 10 mit nur geringem Fertigungsaufwand bei gleichzeitig hohen Qualitätsanforderungen hergestellt werden.

Bei einem Verfahren zur Herstellung des Formkörpers 10 kann die Membran 12 mit einer Dicke von weniger als 0,5 mm sowie der die Membran 12 tragende Tragabschnitt 14 zumindest abschnittsweise mittels 3D-Siebdruck erzeugt werden.

Dabei kann in vorteilhafter Weise zunächst die Membran 12 sowie der Bereich 22 des Tragabschnitts 14, welcher die Membran 12 in Umfangsrichtung umgibt, in mehreren Schichten gedruckt werden. Anschließend können weitere Schichten des Tragabschnitts 14, welche in Höhenrichtung 24 oder entlang einer Längserstreckung des Formkörpers 10 gegenüber der Membran 12 vorstehen, durch den Auftrag weiterer Schichten erzeugt werden. Hierdurch entsteht der Bereich 26 des Tragabschnitts 14.

Die Schichtdicken im Bereich 26 können größer sein als im Bereich 22 des Tragabschnitts 14. Auf diese Weise kann eine Membran 12 beziehungsweise ein die Membran 12 umgebender Bereich 22 des Tragabschnitts 14 mit hoher Genauigkeit hergestellt werden. Demgegenüber kann die erforderliche Gesamtbauhöhe des Tragabschnitts 14 aufgrund der höheren Schichtdicken im Bereich 26 mit hoher Fertigungsgeschwindigkeit erreicht werden.

## Patentansprüche

1. Formkörper (10), insbesondere für einen Drucksensor, mit einer Membran (12) und mit einem die Membran (12) tragenden Tragabschnitt (14), wobei die Membran (12) zumindest abschnittsweise aus einem keramischen Werkstoff mittels additiver Fertigung erzeugt ist und zumindest abschnittsweise eine Dicke von weniger als 0.5 mm aufweist, wobei der größtmögliche Abstand zweier auf dem Außenumfang der Membran (12) liegender Punkte größer ist als 2 mm, **dadurch gekennzeichnet, dass** der Tragabschnitt (14) eine Gesamthöhe in Höhenrichtung (24) von mehr als 2 mm aufweist, dass die Membran (12) und der Tragabschnitt (14) jeweils aus einer Mehrzahl gedruckter Schichten erzeugt sind und dass zumindest eine gedruckte Schicht der Membran (12) eine geringere Dicke aufweist als eine gedruckte Schicht des Tragabschnitts (14).

2. Formkörper (10) nach Anspruch 1, **dadurch gekennzeichnet, dass** die Membran (12) zumindest abschnittsweise eine Dicke von weniger als 0,4 mm, bevorzugt von weniger als 0,35 mm, bevorzugt von weniger als 0,3 mm, weiter bevorzugt von weniger als 0,25 mm, weiter bevorzugt von weniger als 0,225 mm, insbesondere von weniger als 0,2 mm, aufweist und/oder dass die Membran (12) zumindest abschnittsweise eine Dicke von mehr als 0,1 mm, bevorzugt von mehr als 0,15 mm, weiter bevorzugt von mehr als 0,175 mm oder mehr als 0,2 mm, aufweist.

3. Formkörper (10) nach Anspruch 1 oder 2, **dadurch gekennzeichnet, dass** der Tragabschnitt (14) zumindest abschnittsweise aus einem keramischen Werkstoff mittels additiver Fertigung, insbesondere 3D-Siebdruck, erzeugt ist und/oder dass die Membran (12) und der Tragabschnitt (14) jeweils vollständig aus einem keramischen Werkstoff erzeugt sind und/oder dass sich die Werkstoffe der Membran (12) und des Tragabschnitts (14) voneinander unterscheiden und/oder dass die Werkstoffe der Membran (12) und des Tragabschnitts (14) einen identischen Grundstoff und/oder andere Hilfsstoffe aufweisen.

4. Formkörper (10) nach zumindest einem der vorstehenden Ansprüche, **dadurch gekennzeichnet, dass** die Membran (12) und der Tragabschnitt (14) einstückig erzeugt sind und/oder einen monolithischen Körper bilden und/oder dass die Membran (12) und/oder der Tragabschnitt (14) vollständig mittels 3D-Siebdruck erzeugt sind und/oder dass die Membran (12) frei von mechanischen Nachbearbeitungen, insbesondere frei von spanenden Nachbearbeitungen, erzeugt ist und/oder dass die Membran (12) und/oder Tragabschnitt (14) ausschließlich mittels 3D-Siebdruck erzeugt ist.

5. Formkörper (10) nach zumindest einem der vorstehenden Ansprüche, **dadurch gekennzeichnet, dass** die Membran (12) aus einer Anzahl von mindestens 3 Schichten und/oder von höchstens 15 Schichten erzeugt ist, bevorzugt aus einer Anzahl von mehr als 4 und weniger als 12 Schichten, insbesondere 5 bis 15, 10 bis 15, 3 bis 12, 3 bis 10, 5 bis 10 oder 6 bis 8 Schichten.

6. Formkörper (10) nach zumindest einem der vorstehenden Ansprüche, **dadurch gekennzeichnet, dass** der Tragabschnitt (14) in einem in Umfangsrichtung an die Membran (12) angrenzenden Bereich (22) Schichtdicken aufweist, die den Schichtdicken der Membran (12) entsprechen, und/oder dass der Tragabschnitt (14) in einem in Umfangsrichtung an die Membran (12) angrenzenden Bereich aus Schichten erzeugt ist, die unterbrechungsfrei in Schichten der Membran (12) übergehen.

7. Formkörper (10) nach zumindest einem der vorstehenden Ansprüche, **dadurch gekennzeichnet, dass** die Membran (12) fluiddicht, insbesondere gasdicht, ausgebildet ist und/oder dass die Dicke und/oder der Werkstoff der Membran (12) und/oder die Anzahl und/oder Dicke der Schichten der Membran (12) zur Erzielung fluiddichter, insbesondere gasdichter, Eigenschaften gewählt ist.

8. Formkörper (10) nach zumindest einem der vorstehenden Ansprüche, **dadurch gekennzeichnet, dass** die Membran (12) zumindest abschnittsweise eine gerundete, insbesondere kreisrunde, Außenumfangsform aufweist und/oder dass die Membran (12) eine Außenumfangsform mit wenigstens einer Ecke aufweist, insbesondere mit einer Vielzahl von Ecken, und/oder dass die Membran (12) eine viereckigen, rechteckigen, insbesondere quadratischen, dreieckigen, fünfeckigen oder sechseckigen Außenumfangsform aufweist.

9. Formkörper (10) nach zumindest einem der vorstehenden Ansprüche, **dadurch gekennzeichnet, dass** der Tragabschnitt (14) eine Innenumfangsform aufweist, die mit der Außenumfangsform der Membran (12) korrespondiert, und/oder dass der Tragabschnitt (14) eine Innenumfangsform aufweist, die mit der Außenumfangsform des Tragabschnitts (14) korrespondiert, und/oder dass sich die Innenumfangsform des Tragabschnitts (14) von der Außenumfangsform des Tragabschnitts (14) unterscheidet und/oder dass der Tragabschnitt (14) entlang einer Längserstreckung Abschnitte mit unterschiedlichen Innenumfangsformen und/oder Innenumfangsabmessungen aufweist.

10. Formkörper (10) nach zumindest einem der vorstehenden Ansprüche, **dadurch gekennzeichnet, dass** der größtmögliche Abstand zweier auf dem Außenumfang der Membran (12) liegender Punkte kleiner als 18 mm, bevorzugt kleiner als 16 mm, weiter bevorzugt etwa 15 mm, weiter bevorzugt kleiner als 15 mm, weiter bevorzugt kleiner als 12 mm, weiter bevorzugt kleiner als 10 mm, weiter bevorzugt kleiner als 8 mm, weiter bevorzugt kleiner als 6 mm, weiter bevorzugt kleiner als 4,5 mm, noch weiter bevorzugt kleiner als 4 mm, ist und/oder dass der größtmögliche Abstand zweier auf dem Außenumfang der Membran (12) liegender Punkte durch einen Durchmesser oder durch eine Diagonale der Membran (12) definiert ist.

11. Formkörper (10) nach zumindest einem der vorstehenden Ansprüche, **dadurch gekennzeichnet, dass** in einem Querschnitt des Tragabschnitts (14) der größtmögliche Abstand zweier auf dem Außenumfang des Tragabschnitts (14) liegender Punkte kleiner als 25 mm, bevorzugt kleiner als 22 mm, weiter bevorzugt kleiner als 20 mm, weiter bevorzugt kleiner als 15 mm, weiter bevorzugt kleiner als 12 mm, weiter bevorzugt kleiner als 10 mm, noch weiter bevorzugt kleiner als 9,5 mm, noch weiter bevorzugt etwa 9 mm oder kleiner als 9 mm, ist und/oder dass der größtmögliche Abstand zweier auf dem Außenumfang des Tragabschnitts (14) liegender Punkte durch einen Durchmesser oder durch eine Diagonale definiert ist.

12. Formkörper (10) nach zumindest einem der vorstehenden Ansprüche, **dadurch gekennzeichnet, dass** die Membran (12) eine Höhen- und/oder Dickenstrukturierung aufweist und/oder dass die Membran (12) Variationen der Dicke und/oder der Erstreckung in Höhenrichtung (24) aufweist und/oder dass die Membran (12) Abschnitte mit unterschiedlichen Dicken und/oder mit unterschiedlichen Stärken und/oder Erstreckungen in Höhenrichtung aufweist und/oder dass mehrere voneinander getrennte Membrane (12a, 12b) vorgesehen sind.

13. Drucksensor, insbesondere zur Druckmessung von Fluiden, mit einem Formkörper (10) nach einem der vorstehenden Ansprüche und mit einer elektrischen Anordnung, durch die eine Verformung der Membran (12) des Formkörpers (10) detektierbar ist.

14. Verfahren zur Herstellung eines Formkörpers (10), insbesondere nach einem der Ansprüche 1 bis 12, bei dem eine Membran (12) mit einer Dicke von weniger als 0,5 mm und bei der der größtmögliche Abstand zweier auf dem Au-βenumfang der Membran (12) liegender Punkte größer ist als 2 mm sowie ein die Membran (12) tragender Tragabschnitt (14) mit einer Gesamthöhe in Höhenrichtung (24) von mehr als 2 mm zumindest abschnittsweise mittels 3D-Siebdruck erzeugt werden, wobei die Membran (12) und der Tragabschnitt (14) jeweils aus einer Mehrzahl gedruckter Schichten erzeugt werden und zumindest eine gedruckte Schicht der Membran (12) eine geringere Dicke aufweist als eine gedruckte Schicht des Tragabschnitts (14).

## Claims

1. Shaped body (10), in particular for a pressure sensor, having a membrane (12) and having a supporting section (14) supporting the membrane (12), the membrane (12) being produced at least in sections from a ceramic material by means of additive manufacturing and having at least in sections a thickness of less than 0.5 mm, wherein the greatest possible distance between two points lying on the outer circumference of the membrane (12) is greater than 2 mm, **characterized in that** the supporting section (14) has an overall height in height direction (24) of more than 2 mm, **in that** the membrane (12) and the supporting section (14) are each produced from a plurality of printed layers, and **in that** at least one printed layer of the membrane (12) has a smaller thickness than a printed layer of the supporting section (14).

2. Shaped body (10) according to claim 1, **characterized in that** the membrane (12) has, at least in sections, a thickness of less than 0.4 mm, preferably of less than 0.35 mm, preferably of less than 0.3 mm, more preferably of less than 0.25 mm, more preferably less than 0.225 mm, in particular less than 0.2 mm, and/or **in that** the membrane (12) has, at least in sections, a thickness of more than 0.1 mm, preferably more than 0.15 mm, more preferably more than 0.175 mm or more than 0.2 mm.

3. Shaped body (10) according to claim 1 or 2, **characterized in that** the supporting section (14) is produced at least in sections from a ceramic material by means of additive manufacturing, in particular 3D screen printing, and/or in that the membrane (12) and the supporting section (14) are each produced completely from a ceramic material and/or **in that** the materials of the membrane (12) and of the supporting section (14) differ from one another and/or **in that** the materials of the membrane (12) and of the supporting section (14) have an identical base material and/or other auxiliary materials.

4. Shaped body (10) according to at least one of the preceding claims, **characterized in that** the membrane (12) and the supporting section (14) are produced in one piece and/or form a monolithic body and/or **in that** the membrane (12) and/or the supporting section (14) are produced completely by means of 3D screen printing and/or **in that** the membrane (12) is produced free of mechanical post-processing, in particular free of machining post-processing, and/or **in that** the membrane (12) and/or supporting section (14) is produced exclusively by means of 3D screen printing.

5. Shaped body (10) according to at least one of the preceding claims, **characterized in that** the membrane (12) is produced from a number of at least 3 layers and/or from 15 layers at most, preferably from a number of more than 4 and less than 12 layers, in particular 5 to 15, 10 to 15, 3 to 12, 3 to 10, 5 to 10 or 6 to 8 layers.

6. Shaped body (10) according to at least one of the preceding claims, **characterized in that** the supporting section (14) has, in a region (22) adjacent to the membrane (12) in the circumferential direction, layer thicknesses which correspond to the layer thicknesses of the membrane (12), and/or **in that** the supporting section (14) is produced, in a region adjacent to the membrane (12) in the circumferential direction, from layers which merge into layers of the membrane (12) without interruption.

7. Shaped body (10) according to at least one of the preceding claims, **characterized in that** the membrane (12) is designed to be fluid-tight, in particular gas-tight, and/or **in that** the thickness and/or the material of the membrane (12) and/or the number and/or thickness of the layers of the membrane (12) are selected to achieve fluid-tight, in particular gas-tight, properties.

8. Shaped body (10) according to at least one of the preceding claims, **characterized in that** the membrane (12) has, at least in sections, a rounded, in particular circular, outer circumferential shape and/or **in that** the membrane (12) has an outer circumferential shape with at least one corner, in particular with a plurality of corners, and/or **in that** the membrane (12) has a square, rectangular, in particular square, triangular, pentagonal or hexagonal outer circumferential shape.

9. Shaped body (10) according to at least one of the preceding claims, **characterized in that** the support section (14) has an inner circumferential shape corresponding to the outer circumferential shape of the membrane (12), and/or **in that** the support section (14) has an inner circumferential shape corresponding to the outer circumferential shape of the support section (14), and/or **in that** the inner circumferential shape of the support section (14) differs from the outer circumferential shape of the support section (14) and/or **in that** the support section (14) has sections with different inner circumferential shapes and/or inner circumferential dimensions along a longitudinal extension.

10. Shaped body (10) according to at least one of the preceding claims, **characterized in that** the greatest possible distance between two points lying on the outer circumference of the membrane (12) is less than 18 mm, preferably less than 16 mm, more preferably about 15 mm, more preferably less than 15 mm, more preferably less than 12 mm, more preferably less than 10 mm, further preferably less than 8 mm, further preferably less than 6 mm, further preferably less than 4.5 mm, still further preferably less than 4 mm, and/or **in that** the greatest possible distance between two points lying on the outer circumference of the membrane (12) is defined by a diameter or by a diagonal of the membrane (12).

11. Shaped body (10) according to at least one of the preceding claims, **characterised in that** in a cross-section of the support section (14) the greatest possible distance between two points lying on the outer circumference of the support section (14) is less than 25 mm, preferably less than 22 mm, further preferably less than 20 mm, further preferably less than 15 mm, further preferably less than 12 mm, further preferably less than 10 mm, still further preferably less than 9.5 mm, still further preferably about 9 mm or less than 9 mm, and/or **in that** the greatest possible distance between two points lying on the outer circumference of the support section (14) is defined by a diameter or by a diagonal.

12. Shaped body (10) according to at least one of the preceding claims, **characterized in that** the membrane (12) has a height and/or thickness structuring and/or **in that** the membrane (12) has variations in thickness and/or extension in the height direction (24) and/or **in that** the membrane (12) has sections with different thicknesses and/or with different thicknesses and/or extensions in the height direction and/or **in that** a plurality of membranes (12a, 12b) separated from one another are provided.

13. Pressure sensor, in particular for measuring the pressure of fluids, having a shaped body (10) according to one of the preceding claims and having an electrical arrangement by means of which a deformation of the membrane (12) of the shaped body (10) can be detected.

14. Method for producing a shaped body (10), in particular according to one of claims 1 to 12, in which a membrane (12) having a thickness of less than 0.5 mm and in which the greatest possible distance between two points lying on the outer circumference of the membrane (12) is greater than 2 mm, and a supporting section (14) supporting the membrane (12) and having a total height in the height direction (24) of more than 2 mm are produced at least in sections by means of 3D screen printing, wherein the membrane (12) and the supporting section (14) are each produced from a plurality of printed layers and at least one printed layer of the membrane (12) has a smaller thickness than a printed layer of the supporting section (14).

## Revendications

1. Corps moulé (10), en particulier pour un capteur de pression, avec une membrane (12) et avec une section de support (14) qui porte la membrane (12), dans lequel la membrane (12) est produite au moins par sections à partir d'un matériau céramique au moyen d'une fabrication additive et présente au moins par sections une épaisseur inférieure à 0,5 mm, dans lequel la plus grande distance possible entre deux points qui se situent sur la périphérie extérieure de la membrane (12) est supérieure à 2 mm, **caractérisé en ce que** la section de support (14) présente une hauteur totale supérieure à 2 mm dans le sens de la hauteur (24), **en ce que** la membrane (12) et la section de support (14) sont respectivement produites à partir d'une pluralité de couches imprimées et **en ce qu'**au moins une couche imprimée de la membrane (12) présente une épaisseur inférieure à celle d'une couche imprimée de la section de support (14).

2. Corps moulé (10) selon la revendication 1, **caractérisé en ce que** la membrane (12) présente au moins par sections une épaisseur inférieure à 0,4 mm, de préférence inférieure à 0,35 mm, de préférence inférieure à 0,3 mm, davantage de préférence inférieure à 0,25 mm, davantage de préférence inférieure à 0,225 mm, en particulier inférieure à 0,2 mm, et/ou **en ce que** la membrane (12) présente au moins par sections une épaisseur supérieure à 0,1 mm, de préférence supérieure à 0,15 mm, davantage de préférence supérieure à 0,175 mm ou supérieure à 0,2 mm.

3. Corps moulé (10) selon la revendication 1 ou 2, **caractérisé en ce que** la section de support (14) est produite au moins par sections à partir d'un matériau céramique au moyen d'une fabrication additive, en particulier d'une sérigraphie 3D, et/ou **en ce que** la membrane (12) et la section de support (14) sont respectivement produites intégralement à partir d'un matériau céramique et/ou **en ce que** les matériaux de la membrane (12) et de la section de support (14) se différencient l'un de l'autre et/ou **en ce que** les matériaux de la membrane (12) et de la section de support (14) présentent un matériau de base identique et/ou d'autres matières consommables.

4. Corps moulé (10) selon au moins l'une des revendications précédentes, **caractérisé en ce que** la membrane (12) et la section de support (14) sont produites en une seule pièce et/ou **en ce qu'**elles constituent un corps monolithique et/ou **en ce que** la membrane (12) et/ou la section de support (14) sont produites intégralement au moyen d'une sérigraphie 3D et/ou **en ce que** la membrane (12) est produite exempte de post-traitements mécaniques, en particulier exempte de post-traitements avec usinage par enlèvement, et/ou en ce que la membrane (12) et/ou la section de support (14) est produite exclusivement au moyen d'une sérigraphie 3D.

5. Corps moulé (10) selon au moins l'une des revendications précédentes, **caractérisé en ce que** la membrane (12) est produite à partir d'un nombre d'au moins 3 couches et/ou d'au plus 15 couches, de préférence à partir d'un nombre de plus de 4 et de moins de 12 couches, en particulier de 5 à 15, 10 à 15, 3 à 12, 3 à 10, 5 à 10 ou 6 à 8 couches.

6. Corps moulé (10) selon au moins l'une des revendications précédentes, **caractérisé en ce que** la section de support (14) présente, dans une région (22) adjacente à la membrane (12) dans la direction périphérique, des épaisseurs de couche qui correspondent aux épaisseurs de couche de la membrane (12), et/ou **en ce que** la section de support (14), dans une région adjacente à la membrane (12) dans la direction périphérique, est produite avec des couches qui passent sans interruption dans des couches de la membrane (12).

7. Corps moulé (10) selon au moins l'une des revendications précédentes, **caractérisé en ce que** la membrane (12) est conçue de manière étanche aux fluides, en particulier de manière étanche aux gaz, et/ou **en ce que** l'épaisseur et/ou le matériau de la membrane (12) et/ou le nombre et/ou l'épaisseur des couches de la membrane (12) est sélectionné(e) pour obtenir des propriétés d'étanchéité aux fluides, en particulier d'étanchéité aux gaz.

8. Corps moulé (10) selon au moins l'une des revendications précédentes, **caractérisé en ce que** la membrane (12) présente au moins par sections une forme de périphérie extérieure arrondie, en particulier circulaire, et/ou **en ce que** la membrane (12) présente une forme de périphérie extérieure avec au moins un angle, en particulier avec une pluralité d'angles, et/ou **en ce que** la membrane (12) présente une forme de périphérie extérieure quadrangulaire, rectangulaire, en particulier carrée, triangulaire, pentagonale ou hexagonale.

9. Corps moulé (10) selon au moins l'une des revendications précédentes, **caractérisé en ce que** la section de support (14) présente une forme de périphérie intérieure qui correspond à la forme de périphérie extérieure de la membrane (12), et/ou **en ce que** la section de support (14) présente une forme de périphérie intérieure qui correspond à la forme de périphérie extérieure de la section de support (12), et/ou **en ce que** la forme de périphérie intérieure de la section de support (14) se différencie de la forme de périphérie extérieure de la section de support (14) et/ou **en ce que** la section de support (14) présente le long d'un extension longitudinale des sections avec des formes de périphérie intérieure et/ou des dimensions de périphérie intérieure différentes.

10. Corps moulé (10) selon au moins l'une des revendications précédentes, **caractérisé en ce que** la plus grande distance possible entre deux points qui se situent sur la périphérie extérieure de la membrane (12) est inférieure à 18 mm, de préférence inférieure à 16 mm, davantage de préférence inférieure à 15 mm environ, davantage de préférence inférieure à 15 mm, davantage de préférence inférieure à 12 mm, davantage de préférence inférieure à 10 mm, davantage de préférence inférieure à 8 mm, davantage de préférence inférieure à 6 mm, davantage de préférence inférieure à 4,5 mm, encore davantage de préférence inférieure à 4 mm, et/ou **en ce que** la plus grande distance possible entre deux points qui se situent sur la périphérie extérieure de la membrane (12) est définie par un diamètre ou par une diagonale de la membrane (12).

11. Corps moulé (10) selon au moins l'une des revendications précédentes, **caractérisé en ce que** dans une coupe transversale de la section de support (14) la plus grande distance possible entre deux points qui se situent sur la périphérie extérieure de la section de support (14) est inférieure à 25 mm, de préférence inférieure à 22 mm, davantage de préférence inférieure à 20 mm, davantage de préférence inférieure à 15 mm, davantage de préférence inférieure à 12 mm, davantage de préférence inférieure à 10 mm, encore davantage de préférence inférieure à 9,5 mm, encore davantage de préférence inférieure à 9 mm environ ou inférieure à 9 mm, et/ou **en ce que** la plus grande distance possible entre deux points qui se situent sur la périphérie extérieure de la section de support (14) est définie par un diamètre ou par une diagonale.

12. Corps moulé (10) selon au moins l'une des revendications précédentes, **caractérisé en ce que** la membrane (12) présente une structuration de hauteur et/ou d'épaisseur et/ou **en ce que** la membrane (12) présente des variations de l'épaisseur et/ou de l'extension dans le sens de la hauteur (24) et/ou **en ce que** la membrane (12) présente des sections avec des épaisseurs différentes et/ou avec des densités différentes et/ou des extensions dans le sens de la hauteur et/ou **en ce que** sont prévues plusieurs membranes (12a, 12b) séparées les unes des autres.

13. Capteur de pression, en particulier pour mesurer la pression de fluides, avec un corps moulé (10) selon l'une des revendications précédentes et avec un agencement électrique grâce auquel une déformation de la membrane (12) du corps moulé (10) peut être détectée.

14. Procédé de fabrication d'un corps moulé (10), en particulier selon l'une des revendications 1 à 12, où une membrane (12) avec une épaisseur inférieure à 0,5 mm et où la plus grande distance possible entre deux points qui se situent sur la périphérie extérieure de la membrane (12) est supérieure à 2 mm, ainsi qu'une section de support (14) qui porte la membrane (12) avec une hauteur totale supérieure à 2 mm dans le sens de la hauteur (24), sont produites au moins par sections au moyen d'une sérigraphie 3D, dans lequel la membrane (12) et la section de support (14) sont respectivement produites à partir d'une pluralité de couches imprimées et au moins une couche imprimée de la membrane (12) présente une épaisseur inférieure à celle d'une couche imprimée de la section de support (14).
